(19) **Europäisches Patentamt / European Patent Office / Office européen des brevets**

(11) **EP 3 789 941 B1**

(12) **EUROPEAN PATENT SPECIFICATION**

(45) Date of publication and mention of the grant of the patent:
**20.12.2023 Bulletin 2023/51**

(21) Application number: **20775570.3**

(22) Date of filing: **24.02.2020**

(51) International Patent Classification (IPC):
$G06Q\ 10/04$ (2023.01)  $\quad G06Q\ 10/06$ (2023.01)
$G06Q\ 10/067$ (2023.01) $\quad G06Q\ 50/02$ (2012.01)
$G01V\ 9/00$ (2006.01) $\quad G01V\ 99/00$ (2009.01)

(52) Cooperative Patent Classification (CPC):
**G06Q 10/04; G01V 9/005; G01V 99/005; G06Q 10/067; G06Q 50/02**

(86) International application number:
**PCT/CN2020/076346**

(87) International publication number:
**WO 2021/012670 (28.01.2021 Gazette 2021/04)**

(54) **METHOD AND APPARATUS FOR PREDICTING PRODUCTION OF OIL AND GAS OBTAINED FROM SHALE OIL IN-SITU EXPLOITATION**

VERFAHREN UND VORRICHTUNG ZUR VORHERSAGE VON ÖL- UND GASAUSBEUTEN IN IN-SITU-ÖLSCHIEFERFÖRDERUNG

PROCÉDÉ ET APPAREIL POUR PRÉDIRE LA PRODUCTION DE PÉTROLE ET DE GAZ OBTENUS À PARTIR D'UNE EXPLOITATION IN SITU DE PÉTROLE DE SCHISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2019 CN 201910676727**

(43) Date of publication of application:
**10.03.2021 Bulletin 2021/10**

(73) Proprietor: **Petrochina Company Limited Beijing 100007 (CN)**

(72) Inventors:
- **HOU, Lianhua**
  **Beijing 100724 (CN)**
- **FU, Jinhua**
  **Beijing 100724 (CN)**
- **WANG, Jinghong**
  **Beijing 100724 (CN)**
- **LIU, Xianyang**
  **Beijing 100724 (CN)**
- **ZHAO, Zhongying**
  **Beijing 100724 (CN)**

(74) Representative: **Slingsby Partners LLP**
**1 Kingsway**
**London WC2B 6AN (GB)**

(56) References cited:
CN-A- 104 700 316    CN-A- 104 700 316
CN-A- 105 158 816    CN-A- 108 547 612
CN-A- 108 547 612    US-A1- 2010 161 302

- XIE XIAOMIN ET AL: "Petrology and hydrocarbon potential of microalgal and macroalgal dominated oil shales from the Eocene Huadian Formation, NE China", INTERNATIONAL JOURNAL OF COAL GEOLOGY, ELSEVIER, AMSTERDAM, NL, vol. 124, 28 December 2013 (2013-12-28), pages 36-47, XP028667753, ISSN: 0166-5162, DOI: 10.1016/J.COAL.2013.12.013
- LEE HSIEN-TSUNG ET AL: "Study on the relevant parameters for the single maceral compositions in thermal maturation", ENVIRONMENTAL EARTH SCIENCES, SPRINGER BERLIN HEIDELBERG, BERLIN/HEIDELBERG, vol. 75, no. 2, 6 January 2016 (2016-01-06), pages 1-9, XP035963311, ISSN: 1866-6280, DOI: 10.1007/S12665-015-4939-9 [retrieved on 2016-01-06]

**Description**

**TECHNICAL FIELD**

This invention relates to the technical field of oil exploration, and in particular to a method and apparatus for predicting oil and gas yields in in-situ oil shale exploitation.

**BACKGROUND**

Shale herein refers to a shale with a low to medium maturity, a high total organic carbon (TOC) and a low vitrinite reflectance (Ro), and containing the generated petroleum hydrocarbons and the unconverted organic matter. As the level of thermal evolution of the shale with low to medium maturity is not high, the porosity in shale is not well-developed, and flow of fluid is made difficult, which makes it impossible to achieve commercial exploitation with the existing horizontal well volume fracturing technique. Instead the shale with low to medium maturity can be exploited by using an in-situ conversion technique, in which the unconverted organic matter in the shale with low to medium maturity is converted into oil and gas by using an in-situ heating method, and the in-situ converted oil and gas are extracted along with the oil and gas retained in the shale.

It is roughly estimated that globally, recoverable oil resource that can be exploited from shale with low to medium maturity by using the in-situ conversion technique amounts to about 1.4 trillion tons, and recoverable gas resource amounts to about 1,100 trillion cubic meters. While in China, recoverable oil resource that can be exploited from shale with low to medium maturity by using the in-situ conversion technique amounts to about 70-90 billion tons, and recoverable gas resource amounts to about 57-65 trillion cubic meters. These figures are more than 3 times of the recoverable resource that can be exploited by using conventional oil and natural gas technologies, which is very promising.

In the related art, there are four approaches for predicting oil and gas yields of a shale. The first one is to determine a hydrogen-carbon ratio (H/C) based on kerogen in the shale, and to establish an evaluation model for oil and gas yields with TOC and Ro of the shale. The second one involves a simulation experiment in an open system, in which samples (of small amount, usually several grams) are crushed, and the samples of an amount required by an instrument are placed and heated to a set temperature rapidly, hydrocarbons generated and discharged from the samples during the temperature rise are collected for analysis, and the experiment is finished when the samples reach the set temperature. The third one involves a simulation experiment of hydrocarbon generation and discharge under high temperature and high pressure in a semi-open system, in which crushed samples (generally 200g) are put into a sample kettle which then is vacuumized and applied with an overburden pressure, and a hydrocarbon discharge pressure threshold is set, the samples are heated rapidly to a set temperature and are kept at this temperature for several days, then the discharged natural gas, crude oil and water are collected and quantitatively analyzed, so as to determine the hydrocarbon retained in the samples. The fourth one involves a hydrocarbon generation simulation- gold tube simulation experiment in a closed system, in which crushed samples (generally 0.02g-0.1 g) are put into a sample kettle which is then vacuumized, a high-pressure water pump maintains a constant fluid pressure outside a gold pipe, the samples are heated rapidly to a set temperature, and the experiment is finished when it reaches the set temperature, the generated natural gas and light crude oil are collected and quantitatively analyzed, so as to determine the hydrocarbon retained in the samples. Alternatively, the fourth approach involves hydrocarbon generation simulation-autoclave simulation experiment in a closed system, in which crushed samples (generally 200 g) are put into a sample kettle without water or with a small amount of water, then the sample kettle is vacuumized, the samples are heated rapidly to a set temperature, and the experiment is finished when it reaches the set temperature, the generated natural gas and light crude oil are collected and quantitatively analyzed, so as to determine the hydrocarbon retained in the samples.

The four approaches for evaluating oil and gas yields of a shale in the related art are all deficient. The first approach involves a method for evaluating oil and gas yields of a shale by using H/C. The H/C can be acquired by analyzing and measuring micro-phase organic matters; however, the measurement of H/C is not only time-consuming but also expensive. In addition, during the separation of kerogen, aqueous silicate rock deposits, which releases hydrogen in combustion and results in an abnormally high H/C. The silica gel contamination can be identified by a microscope and can be disposed with hot hydrochloric acid, but silicon fluoride is insoluble in acid, resulting in a large error in H/C measurement, and therefore the evaluation accuracy is not high. The second approach involves a simulation experiment in open system, it is impossible to apply a pressure and simulate the actual formation conditions, the amount of sample is rather small, resulting in a large error, and speed of heat-up is rather high, making it impossible to truly reflect the thermal maturation process of the hydrocarbon source rock, and to determine the oil and gas retention amounts under the formation conditions. The third approach involves a simulation experiment of hydrocarbon generation and discharge under high temperature and high pressure in a semi-open system, using crushed loose samples. The loose samples contain many voids, making the determined oil and gas retention amounts inaccurate, and making it impossible to truly reflect the oil and gas retention amounts and discharge amount of hydrocarbon source rock in the thermal maturation process under the formation conditions. In addition, it is impossible to obtain data from varied pressure. Those factors make it impossible to achieve an accurate evaluation of generated hydrocarbon, retained hydrocarbon and produced hydrocarbon of a shale. The fourth approach involves a hydrocarbon generation simulation-gold tube simulation experiment in a closed system. In this approach, it is impossible to simulate the hydrocarbon discharge process, and a secondary cracking occurs in the generated oil and gas, in addition, the amount of sample is small, the error is large, and the temperature rise is fast, making it impossible to truly reflect the thermal maturation process of the hydrocarbon source rock. While in the hydrocarbon generation simulation

- autoclave simulation experiment in the closed system, it is impossible to simulate the hydrocarbon discharge and the retained oil and gas, the furnace wall is thick, making it difficult to measure temperature accurately and to control the pressure, the experiment is not performed under a constant pressure, resulting in a rather high probability of secondary hydrocarbon generation and cracking of oil and gas, in addition, the fast temperature rise makes it impossible to truly reflect the thermal maturation process of the hydrocarbon source rock. So far, there is no high-precision method for evaluating oil and gas yields in shale oil in-situ conversion.

CN 108547612A provides a method and an apparatus for determining an oil output quantity and a gas output quantity of a shale oil in-situ conversion, wherein the method comprises: obtaining a plurality of groups of shale samples of a target stratum of a target area; determining, according to the plurality of groups of shale samples, a first retained oil quantity, a first retained gas quantity, a Ro parameter, an oil output quantity, a gas output quantity, a second retained oil quantity, and a second retained gas quantity of each group of shale samples in the plurality of groups of shale samples under each preset temperature; building an oil output quantity model and a gas output quantity model according to the above data to determine an oil output quantity and a gas output quantity of the target area.

CN 104700316A relates to an nonuniformity evaluation method for oil and gas generation quantity of shale, which has important meaning to the nonuniformity of quantitatively characterize shale oil-gas possibility and accurate evaluation unconventional shale hydrocarbon resources.

In summary, the related-art approaches for predicting oil and gas yields in in-situ oil shale exploitation cannot quantitatively predict oil and gas yields in in-situ oil shale exploitation, with a low prediction accuracy and efficiency. For the above technical problems, no effective solution has been proposed yet.

## SUMMARY

An embodiment of the present invention provides a method for predicting oil and gas yields in in-situ oil shale exploitation, for quantitatively predicting oil and gas yields in in-situ oil shale exploitation, and improving accuracy and efficiency in prediction of oil and gas yields in in-situ oil shale exploitation. The method comprises:

acquiring an original total organic carbon (TOC) value, a vitrinite reflectance (Ro) value and an original hydrogen index (HI) value of a shale to be measured;
obtaining an oil yield of the shale to be measured based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples; and
obtaining a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples;
wherein acquiring the original total organic carbon (TOC) value, the vitrinite reflectance (Ro) value and the original hydrogen index (HI) value of the shale to be measured comprises: obtaining the original TOC value of the shale to be measured based on a TOC value and a Ro value obtained by measuring the shale to be measured and a pre-established model for predicting original TOC, wherein the model for predicting original TOC is pre-established based on a TOC change rate obtained by performing a thermal simulation experiment on a plurality of different shale samples; and obtaining the original HI value of the shale to be measured based on a HI value and a Ro value obtained by measuring the shale to be measured and a pre-established model for predicting original HI, wherein the model for predicting original HI is pre-established based on a HI change rate obtained by performing a thermal simulation experiment on a plurality of different shale samples;
wherein the model for predicting original HI is:

$$HI_o = \frac{HI}{a_2 \times e^{b_2 \times Ro}}$$

wherein $HI_o$ denotes the original HI value of the shale to be measured; $HI$ denotes the HI value obtained by measuring the shale to be measured; Ro denotes the Ro value obtained by measuring the shale to be measured, and $a_2$ and $b_2$ denote empirical coefficients.

Optionally, in the abovementioned method for predicting oil and gas yields in in-situ oil shale exploitation, the model for predicting original TOC is:

$$TOC_o = \frac{TOC}{f(a_{31})\ln(HT) + f(a_{32})}$$

wherein

$$HT = 10^{-3} \times HI_o \times TOC_o$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases}$$

$$f(a_{32}) = b_{321}Ro^2 + b_{322}Ro + b_{323}$$

$TOC_o$ denotes the original TOC value of the shale to be measured; $TOC$ denotes the TOC value obtained by measuring the shale to be measured; Ro denotes the Ro value obtained by measuring the shale to be measured; $HI_o$ denotes the original HI value of the shale to be measured; and $b_{311}$, $b_{312}$, $b_{313}$, $b_{314}$, $b_{315}$, $b_{321}$, $b_{322}$ and $b_{323}$ denote empirical coefficients.

Optionally, the abovementioned method for predicting oil and gas yields in in-situ oil shale exploitation further comprises: obtaining a residual oil generation amount of the shale to be measured based on the original TOC value, the Ro value, the original HI value of the shale to be measured and a pre-established model for predicting residual oil generation amount in in-situ oil shale exploitation, wherein the model for predicting residual oil generation amount in in-situ oil shale exploitation is pre-established based on residual oil generation amount data obtained by performing a thermal simulation experiment on a plurality of different shale samples and the original TOC value, the Ro value and the original HI value of the shale samples; and obtaining a residual gas generation amount of the shale to be measured based on the original TOC value, the Ro value, the original HI value of the shale to be measured and a pre-established model for predicting residual gas generation amount in in-situ oil shale exploitation, wherein the model for predicting residual gas generation amount in in-situ oil shale exploitation is pre-established based on residual gas generation amount data obtained by performing a thermal simulation experiment on a plurality of different shale samples and the original TOC value, the Ro value and the original HI value of the shale samples.

Optionally, in the abovementioned method for predicting oil and gas yields in in-situ oil shale exploitation, the model for predicting residual oil generation amount in in-situ oil shale exploitation is:

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}}$$

wherein $Q_{og}$ denotes the residual oil generation amount of the shale to be measured; $Q_{ogs}$ denotes a total oil generation amount of the shale samples in the thermal simulation experiment; Ro denotes the Ro value obtained by measuring the shale to be measured; $a_4$ and $b_4$ denote empirical coefficients; $TOC_{os}$ denotes the original TOC value of the shale samples in the thermal simulation experiment; $HI_{os}$ denotes the original HI value of the shale samples in the thermal simulation experiment; $TOC_{ot}$ denotes the original TOC value of the shale to be measured; and $HI_{ot}$ denotes the original HI value of the shale to be measured.

Optionally, in the abovementioned method for predicting oil and gas yields in in-situ oil shale exploitation, the model for predicting residual gas generation amount in in-situ oil shale exploitation is:

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \leq 1.6\% \\ a_{53} \times Ro^{b_{51}} & Ro > 1.6\% \end{cases};$$

wherein, $Q_{gg}$ denotes the residual gas generation amount of the shale to be measured; $Q_{ggs}$ denotes a total residual gas generation amount of the shale samples in the thermal simulation experiment; $Ro$ denotes the Ro value obtained by measuring the shale to be measured; $TOC_{os}$ denotes the original TOC value of the shale samples in the thermal simulation experiment; $HI_{os}$ denotes the original HI value of the shale samples in the thermal simulation experiment; $TOC_{ot}$ denotes the original TOC value of the shale to be measured; $HI_{ot}$ denotes the original HI value of the shale to be measured; and $a_{51}$, $a_{52}$, $a_{53}$ and $b_{51}$ denote empirical coefficients.

Optionally, the abovementioned method for predicting oil and gas yields in in-situ oil shale exploitation further comprises: obtaining an oil retention amount of the shale to be measured based on the original TOC value, the Ro value, the original HI value of the shale to be measured and a pre-established model for predicting oil retention amount in in-situ oil shale exploitation, wherein the model for predicting oil retention amount in in-situ oil shale exploitation is pre-established based on oil retention amount data obtained by performing a thermal simulation experiment on a plurality of different shale samples and the original TOC value, the Ro value and the original HI value of the shale samples; and obtaining a gas retention amount of the shale to be measured based on the original TOC value, the Ro value, the original HI value of the shale to be measured and a pre-established model for predicting gas retention amount in in-situ oil shale exploitation, wherein the model for predicting gas retention amount in in-situ oil shale exploitation is pre-established based on gas retention amount data obtained by performing a thermal simulation experiment on a plurality of different shale samples and the original TOC value, the Ro value and the original HI value of the shale sample.

Optionally, in the abovementioned method for predicting oil and gas yields in in-situ oil shale exploitation, the model for predicting oil retention amount in in-situ oil shale exploitation is:

$$Q_{os} = Q_{og} \times B_{or} \times \frac{HI_{ot}}{HI_{os}} \begin{cases} f(a_6) \times \ln(TOC_o) + f(b_6) & TOC \leq 8.5\% \\ f(c_6) \times TOC_o + f(d_6) & TOC > 8.5\% \end{cases};$$

wherein $Q_{os}$ denotes the oil retention amount of the shale to be measured; $Q_{og}$ denotes a residual oil generation amount of the shale samples in the thermal simulation experiment; $TOC_o$ denotes the original total organic carbon value of the shale to be measured; $f(a_6)$, $f(b_6)$, $f(c_6)$, $f(d_6)$ denote correction coefficients related to the Ro value of the shale to be measured; $B_{or}$, denotes a ratio of an oil volume factor under an actual formation pressure in a research area to which the shale to be measured belongs, to an oil volume factor under a pressure used in the simulation; $HI_{os}$ denotes the original HI value of the shale samples in the thermal simulation experiment; and $HI_{ot}$ denotes the original HI value of the shale to be measured.

Optionally, in the abovementioned method for predicting oil and gas yields in in-situ oil shale exploitation, the model for predicting gas retention amount in in-situ oil shale exploitation is:

$$Q_{gs} = Q_{gg} \times B_{gir} \times \frac{HI_{ot}}{HI_{os}} \times f(a_7) \times Ro^{f(b_7)};$$

wherein, $Q_{gs}$ denotes the gas retention amount of the shale to be measured; $Q_{gg}$ denotes the residual gas generation amount of the shale samples in the thermal simulation experiment; $f(a_7)$ and $f(b_7)$ denote correction coefficients related to $TOC_o$ of the shale to be measured; $B_{gir}$ denotes a ratio of a gas deviation factor under an actual formation temperature and an actual pressure in a research area to which the shale to be measured belongs, to a gas deviation factor under a temperature and a pressure used in the simulation, $HI_{os}$ denotes the original HI value of the shale samples in the thermal simulation experiment; $HI_{ot}$ denotes the original HI value of the shale to be measured; and $Ro$ denotes the Ro value obtained by measuring the shale to be measured.

Optionally, in the abovementioned method for predicting oil and gas yields in in-situ oil shale exploitation, the model for predicting oil yield in in-situ oil shale exploitation is:

$$Q_{po} = (Q_{os} + Q_{og}) \times f(a_{81})Ro^2 + f(a_{82})Ro + f(a_{83})$$ ;

$$f(a_8) = c_{81}HT^3 + c_{82}HT^2 + c_{83}HT + c_{84}$$ ;

$$HT = 10^{-3} \times HI_o \times TOC_o$$ ;

wherein, $Q_{po}$ denotes the oil yield of the shale to be measured; $Q_{os}$ denotes the oil retention amount of the shale to be measured; $Q_{og}$ denotes the residual oil generation amount of the shale to be measured; $Ro$ denotes the Ro value obtained by measuring the shale to be measured; $f(a_{81})$, $f(a_{82})$, $f(a_{83})$ denote correction coefficients related to the Ro value of the shale to be measured, $HI_o$ denotes the original HI value of the shale to be measured; $TOC_o$ denotes the original TOC value of the shale to be measured; and $c_{81}$, $c_{82}$, $c_{83}$ and $c_{84}$ denote empirical coefficients.

Optionally, in the abovementioned method for predicting oil and gas yields in in-situ oil shale exploitation, the model for predicting gas yield in in-situ oil shale exploitation is:

$$Q_{pg} = (Q_{gs} + Q_{gg}) \times f(a_{91}) \times HT^{f(b_{91})}$$ ;

wherein,

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases}$$ ;

$$f(b_{91}) = c_{916}HT^2 + c_{917}HT + c_{918}$$ ;

$$HT = 10^{-3} \times HI_o \times TOC_o$$ ;

$Q_{pg}$ denotes the gas yield of the shale to be measured; $Q_{gs}$ denotes the gas retention amount of the shale to be measured; $Q_{gg}$ denotes the residual gas generation amount of the shale to be measured; $Ro$ denotes the Ro value obtained by measuring the shale to be measured; $HI_o$ denotes the original HI value of the shale to be measured; $TOC_o$ denotes the original TOC value of the shale to be measured; $f(a_{91})$ and $f(b_{91})$ denote correction coefficients related to the Ro value of the shale to be measured; and $c_{911}$, $c_{912}$, $c_{913}$, $c_{914}$, $c_{915}$, $c_{916}$, $c_{917}$, and $c_{918}$ denote empirical coefficients.

An embodiment of the present invention provides an apparatus for predicting oil and gas yields in in-situ oil shale exploitation, for quantitatively predicting oil and gas yields in the in-situ oil shale exploitation, and improving accuracy and efficiency of prediction of oil and gas yields in the in-situ oil shale exploitation. The apparatus comprises:

an acquisition unit configured to acquire an original total organic carbon (TOC) value, a vitrinite reflectance (Ro) value and an original hydrogen index (HI) value of a shale to be measured;
an oil yield prediction unit configured to obtain an oil yield of the shale to be measured based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples; a gas yield prediction unit configured to obtain a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples.

Optionally, the acquisition unit is specifically configured to: obtain the original TOC value of the shale to be measured based on a TOC value and a Ro value obtained by measuring the shale to be measured and a pre-established model for predicting original TOC, wherein the model for predicting original TOC is pre-established based on a TOC change rate obtained by performing a thermal simulation experiment on a plurality of different shale samples; and obtain the original HI value of the shale to be measured based on a HI value and a Ro value obtained by measuring the shale to be measured and a pre-established model for predicting original HI, wherein the model for predicting original HI is pre-established based on a HI change rate obtained by performing a thermal simulation experiment on a plurality of different shale samples.

Optionally, the apparatus for predicting oil and gas yields in in-situ oil shale exploitation further comprises: a residual oil generation amount prediction unit configured to obtain a residual oil generation amount of the shale to be measured based on the original TOC value, the Ro value, the original HI value of the shale to be measured and a pre-established model for predicting residual oil generation amount in in-situ oil shale exploitation, wherein the model for predicting residual oil generation amount in in-situ oil shale exploitation is pre-established based on residual oil generation amount data obtained by performing a thermal simulation experiment on a plurality of different shale samples and the original TOC value, the Ro value and the original HI value of the shale samples; and a residual gas generation amount prediction unit configured to obtain a residual gas generation amount of the shale to be measured based on the original TOC value, the Ro value, the original HI value of the shale to be measured, and a pre-established model for predicting residual gas generation amount in in-situ oil shale exploitation, wherein the model for predicting residual gas generation amount in in-situ oil shale exploitation is pre-established based on residual gas generation amount data obtained by performing a thermal simulation experiment on a plurality of different shale samples and the original TOC value, the Ro value and the original HI value of the shale samples.

Optionally, the apparatus for predicting oil and gas yields in in-situ oil shale exploitation further comprises: an oil retention amount prediction unit configured to obtain an oil retention amount of the shale to be measured based on the original TOC value, the Ro value, the original HI value of the shale to be measured and a pre-established model for predicting oil retention amount in in-situ oil shale exploitation, wherein the model for predicting oil retention amount in in-situ oil shale exploitation is pre-established based on oil retention amount data obtained by performing a thermal simulation experiment on a plurality of different shale samples and the original TOC value, the Ro value and the original HI value of the shale samples; and a gas retention amount prediction unit configured to obtain a gas retention amount of the shale to be measured based on the original TOC value, the Ro value, the original HI value of the shale to be measured and a pre-established model for predicting gas retention amount in in-situ oil shale exploitation, wherein the model for predicting gas retention amount in in-situ oil shale exploitation is pre-established based on gas retention amount data obtained by performing a thermal simulation experiment on a plurality of different shale samples and the original TOC value, the Ro value and the original HI value of the shale sample.

An embodiment of the present invention further provides a computer device including a memory, a processor and a computer program stored in the memory and executable by the processor, the processor implements, when executing the computer program, the methods for predicting oil and gas yields in in-situ oil shale exploitation as described above.

An embodiment of the present invention further provides a computer readable storage medium storing a computer program for performing the methods for predicting oil and gas yields in in-situ oil shale exploitation as described above.

The technical solutions provided by the embodiments of the present invention achieves the following advantageous technical effects:

Firstly, a model for predicting oil yield in in-situ oil shale exploitation is pre-established based on the oil yield data obtained by performing a thermal simulation experiment on a plurality of different shale samples, as well as the original TOC value, the Ro value and the original HI value of the shale samples, and a model for predicting gas yield in in-situ oil shale exploitation is pre-established based on gas yield data obtained by performing a thermal simulation experiment on a plurality of different shale samples, as well as the original TOC value, the Ro value and the original HI value of shale samples, so as to overcome the defects in the related art that a model is established by taking only a single factor of shale into account, thus the relevant oil and gas parameters of shale samples can be obtained more accurately. Therefore, the application of the model for predicting oil yield in in-situ oil shale exploitation as well as the model for predicting gas yield in in-situ oil shale exploitation not only achieves a quantitative prediction of oil and gas yields in in-situ oil shale exploitation, but also improves accuracy of prediction of oil and gas yields in in-situ oil shale exploitation.

Secondly, in the related art, oil yield and gas yield in in-situ conversion of a shale to be measured cannot be determined before simulations of oil yield and gas yield in in-situ conversion of a shale are performed for the same region or horizon, and for different regions or horizons, and simulations for shale samples with different original TOCs, Ros and original HIs are performed, which is time consuming and high in cost. Comparatively, in the technical solution provided in the embodiments of the present invention, with the model for predicting oil yield in in-situ oil shale exploitation and the model for predicting gas yield in in-situ oil shale exploitation, which have a high prediction accuracy as described above, the oil and gas yields in in-situ oil shale exploitation of the shale to be measured can be obtained once the original TOC value, the Ro value and the original HI value of the shale to be measure are acquired, eliminating the necessity of performing a simulation experiment on the shale to be measured, therefore the efficiency in predicting oil and gas yields in in-situ oil shale exploitation is improved.

In summary, the technical solutions provided in the embodiments of the present invention achieve a quantitative prediction of oil and gas yields in in-situ oil shale exploitation, and improve accuracy and efficiency of prediction of oil and gas yields in in-situ oil shale exploitation.

## BRIEF DESCRIPTION OF DRAWINGS

The drawings described herein are used for providing further understanding of the present invention and constitute a part of the present disclosure, and do not constitute any limitations to the invention. In the drawings:

FIG. 1 is a schematic flow diagram of a method for predicting oil and gas yields in in-situ oil shale exploitation according to an embodiment of the present invention;

FIG. 2 is a diagram illustrating a relationship between thermal simulation temperature and Ro of a shale sample according to an embodiment of the present invention;

FIG. 3 is diagram illustrating a relationship between hydrogen index of shale/original hydrogen index and vitrinite reflectance Ro of a shale according to an embodiment of the present invention;

FIG. 4 is a diagram illustrating a relationship between TOC and TOC change rate, and vitrinite reflectance Ro of a shale according to an embodiment of the present invention;

FIG. 5 is a diagram illustrating a relationship between residual oil generation amount and vitrinite reflectance Ro of a shale according to an embodiment of the present invention;

FIG. 6 is a diagram illustrating a relationship between residual gas generation amount and vitrinite reflectance Ro of a shale according to an embodiment of the present invention;

FIG. 7 is a diagram illustrating a relationship between oil retention amount and vitrinite reflectance Ro of a shale according to an embodiment of the present invention;

FIG. 8 is a diagram illustrating a relationship between gas retention amount and vitrinite reflectance Ro of a shale according to an embodiment of the present invention;

FIG. 9 is a diagram illustrating a relationship between oil yield and vitrinite reflectance Ro of a shale according to an embodiment of the present invention;

FIG. 10 is a diagram illustrating a relationship between gas yield and vitrinite reflectance Ro of a shale according to an embodiment of the present invention; and

FIG. 11 is a schematic structural diagram of an apparatus for predicting oil and gas yields in in-situ oil shale exploitation according to an embodiment of the present invention.

## DESCRIPTION OF EMBODIMENTS

In order to explain purpose, technical solution and advantages of the invention more clearly, the invention will be further described in detail hereinafter in combination with the embodiments and the accompanying drawings. The schematic embodiments of the invention and the description herein are used for explaining the invention and do not constitute a limitation to the invention.

The inventor has found out that the oil shale in-situ conversion technology is different from the related art in that, the in-situ conversion technology is applicable to the shale having a low to medium maturity, the "sweet spots" of in-situ conversion dominates the distribution of high-quality resources of shale, and it is necessary to evaluate and select the "sweet spots" before in-situ conversion and exploit, i.e., to determine preferred areas for shale oil exploitation by predicting oil and gas yields in shale oil in-situ conversion. Oil and gas yields in in-situ conversion is an important aspect of the evaluation. The oil and gas yields in in-situ conversion dominates the exploitation profit of shale oil in-situ conversion, therefore the residual oil and gas generation amounts, the oil and gas retention amounts and the oil and gas yields of the shale are the key to evaluation (prediction) of shale oil in-situ conversion. In order to meet the requirements of evaluation of in-situ conversion and exploration, it is necessary to evaluate the oil and gas yields in in-situ conversion with a new concept and evaluation method.

In view of the technical problems as described above, in order to overcome the deficiencies and defects in the related art that it is impossible to accurately and quantitatively predict oil and gas yields in shale oil in-situ conversion, the inventor proposes a solution for evaluating (predicting) oil and gas yields in shale oil in-situ conversion. The present invention can further accurately evaluate and predict the oil and gas retention amounts in the shale and the residual oil and gas generation amounts in in-situ conversion. The solution for predicting oil and gas yields in in-situ conversion (exploit) of shale oil according to an embodiment of the present invention will be described in detail below.

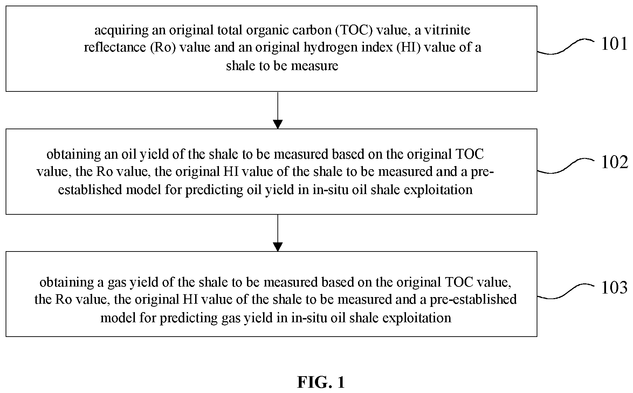

FIG. 1 is a schematic flow diagram of a method for predicting oil and gas yields in in-situ oil shale exploitation according to an embodiment of the present invention. As shown in FIG. 1, the method comprises:

Step 101: acquiring an original total organic carbon (TOC) value, a vitrinite reflectance (Ro) value and an original hydrogen index (HI) value of a shale to be measured;

Step 102: obtaining an oil yield of the shale to be measured based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples;

Step 103: obtaining a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples. The plurality of different shale samples are a plurality of shale samples having a Ro value less than 0.5%.

The technical solution provided in this embodiment of the present invention achieves the following beneficial technical effects:

Firstly, a model for predicting oil yield in in-situ oil shale exploitation is pre-established based on the oil yield data obtained by performing a thermal simulation experiment on a plurality of different shale samples, as well as the original TOC value, the Ro value and the original HI value of the shale samples, and a model for predicting gas yield in in-situ oil shale exploitation is pre-established based on gas yield data obtained by performing a thermal simulation experiment on a plurality of different shale samples, as well as the original TOC value, the Ro value and the original HI value of shale samples, so as to overcome the defects in the related art that a model is established by taking only a single factor of shale into account, thus the relevant oil and gas parameters of shale samples can be obtained more accurately. Therefore, the application of the model for predicting oil yield in in-situ oil shale exploitation as well as the model for predicting gas yield in in-situ oil shale exploitation not only achieves a quantitative prediction of oil and gas yields in in-situ oil shale exploitation, but also improves accuracy of prediction of oil and gas yields in in-situ oil shale exploitation.

Secondly, in the related art, oil yield and gas yield in in-situ conversion of a shale to be measured cannot be determined before simulations of oil yield and gas yield in in-situ conversion of a shale are performed for the same region or horizon, and for different regions or horizons, and simulations for shale samples with different original TOCs, Ros and original His are performed, which is time consuming and high in cost. Comparatively, in the technical solution provided in the embodiments of the present invention, with the model for predicting oil yield in in-situ oil shale exploitation and the model for predicting gas yield in in-situ oil shale exploitation, which have a high prediction accuracy as described above, the oil and gas yields in in-situ oil shale exploitation of the shale to be measured can be obtained once the original TOC value, the Ro value and the original HI value of the shale to be measure are acquired, eliminating the necessity of performing a simulation experiment on the shale to be measured, therefore the efficiency in predicting oil and gas yields in in-situ oil shale exploitation is improved.

In summary, the technical solutions provided in the embodiments of the present invention achieve a quantitative prediction of oil and gas yields in in-situ oil shale exploitation, and improve accuracy and efficiency of prediction of oil and gas yields in in-situ oil shale exploitation.

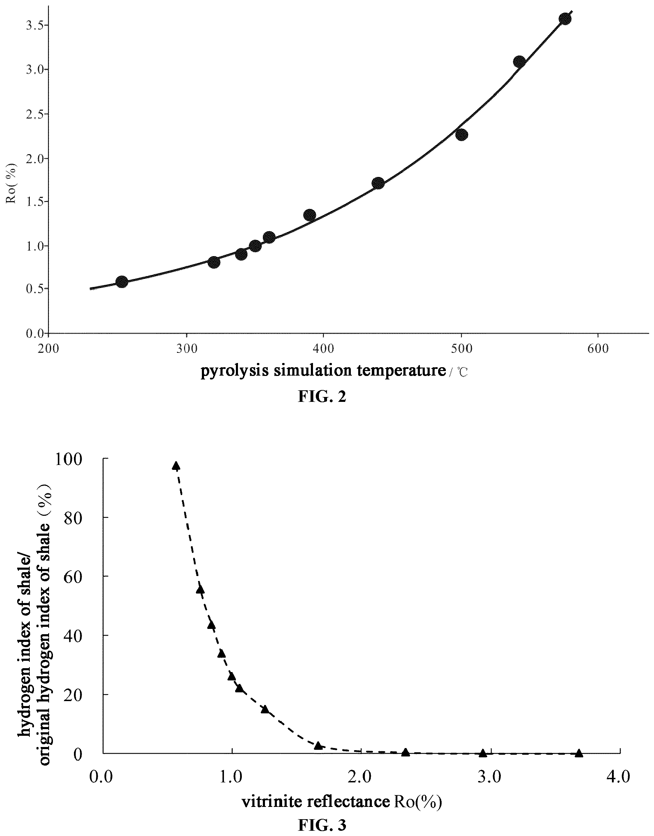

Each step involved in this embodiment of the present invention will now be described in detail below with reference to FIG. 2 to FIG. 10.

I. Firstly, the detailed process of performing a thermal simulation experiment on shale samples before establishing each model is introduced.

Several groups of shale samples having different TOC values and Ro value less than 0.5% are collected in the target reservoir of a research area, for example, outcrop shale samples from 7 long sections of the Ordos Basin, for example, 9 groups of shale samples having different TOCs and Ro value less than 0.5% are collected. Each group of shale samples is comminuted into 40 to 100 meshes, preferably 60 meshes, and are fully and uniformly mixed, and each group of the uniformly mixed shale samples is divided into 12 parts, each of which weighs greater than 3 kg.

The total organic carbon (TOC), hydrogen index (HI) and vitrinite reflectance (Ro) of each group of comminuted and mixed shale samples are measured respectively (see details in Table 1 below). The shale samples collected respectively at the individual sampling points are more than 40 kg. In the case of outcrop shale samples, the shale samples are collected at a location 5 m below the ground level and unweathered shale samples are collected.

TOC is measured in accordance with the National Standard GB/T 19145-2003, *"Determination of Total Organic Carbon in Sedimentary Rocks* "; HI is measured in accordance with the industrial standard SYT 5735-1995, *"Geochemical Evaluation Method for Terrestrial Source Rocks";* and Ro is measured in accordance with the industry standard SY/T 5124-2012, *"Method for Determining Vitrinite Reflectance in Sedimentary Rocks* ".

Table 1 Characteristic parameters of shale samples of target reservoir in the research area

| Sample No. | No.1 | No.2 | No.3 | No.4 | No.5 | No.6 | No.7 | No.8 | No.9 |
|---|---|---|---|---|---|---|---|---|---|
| TOC (wt%) | 0.512 | 2.034 | 3.495 | 5.027 | 6.436 | 8.509 | 13.341 | 20.674 | 25.988 |
| HI (mg/g.TOC) | 618.043 | 668.860 | 680.009 | 631.090 | 642.303 | 612.709 | 647.629 | 676.071 | 680.652 |
| Ro (%) | 0.431 | 0.458 | 0.474 | 0.469 | 0.473 | 0.467 | 0.481 | 0.468 | 0.482 |

Two sets of thermal simulation experiment are performed, one is a thermal simulation experiment for hydrocarbon generation amount of shale and the other is a thermal simulation experiment for hydrocarbon retention amount and hydrocarbon production amount. A semi-open experimental system with the same preset pressure of 5MPa and different preset temperatures is used in the both sets of experiment. Samples of about 2 kg are put into a reaction kettle and repeatedly compacted at a pressure of 20 MPa. The mass of the shale sample in the reaction kettle is obtained before the simulation. The reaction kettle is vacuumized and He is injected into the reaction kettle. 11 temperature points are pre-set, which are 250 °C, 300 °C, 320 °C, 335 °C, 350 °C, 360 °C, 390 °C, 440 °C, 500 °C, 540 °C and 580 °C, respectively, covering different stages from the beginning to the end of oil and gas generation. The first preset temperature point is 250 °C, a programmed rate of temperature rise of 20 °C/d is adopted before the simulation for temperature 200 °C, and a programmed rate of temperature rise of 5 °C/d is adopted between temperatures of 200 °C and 250 °C. From the 2nd to 11th preset temperature points, a programmed rate of temperature rise of 20 °C/d is adopt before the simulation temperature reaches the previous preset temperature point, and a programmed rate of temperature rise of 5 °C/d is adopted between the previous preset temperature point and the current preset temperature point. After the simulation temperature reaches the preset temperature, the preset temperature is kept to be constant for 10 hours. A preset pressure for hydrocarbon discharge is 7 MPa, and the oil and gas amount discharged in the simulation process is used to calculate the oil and gas amounts per unit mass of rock. The oil and gas amount purged and extracted after completion of simulation for predicted temperature is used to calculate the oil and gas retention amounts per unit mass of rock.

The shales collected at each sampling point are taken as a group for conducting a thermal simulation experiment on hydrocarbon generation amount. After the experiment is completed for the first preset temperature, the ratios of the collected discharged and retained oil yield and discharged and retained gas amount to the mass of the samples before simulation are taken as residual oil generation amount and residual gas generation amount per unit mass of the rock at the first preset temperature point of the sample. After extracting the thermal simulation sample for the first preset temperature point, the thermal simulation for the second preset temperature point is carried out to obtain the oil generation amount and the residual gas generation amount per unit mass of the rock at the second preset temperature point, and analogously, the thermal simulation for all the preset temperature points is conducted. The thermal simulation experiment for hydrocarbon generation is carried out for 9 shale sample points, and the corresponding oil generation amount and residual gas generation amount per unit mass of rock are obtained. After completion of experiment for each preset temperature point, parameters such as TOC of the residue after extraction are measured...

Thermal simulation experiment on the oil and gas retention amounts and oil and gas yields at 11 preset temperature points are carried out by using the shale at each sample point. After the simulation is completed, according to the ratios of the oil yield and the gas yield that are collected to the mass of sample within the corresponding reaction kettle before the thermal simulation, an oil yield and a gas yield per unit mass of rock at the corresponding preset temperature points are obtained. According to the ratios of oil and gas yields that are purged and extracted to the mass of sample within the corresponding reaction kettle before the thermal simulation, the oil and gas retention amounts per unit mass of rock at the corresponding preset temperature points are obtained. After the end at each preset temperature point, TOC, HI, and Ro of the residue after extraction are measured to obtain an average value of deviation coefficients (Z) of a natural gas amount produced at different preset temperatures.

The relationship between the pyrolysis simulation temperature and Ro is established by using an average value of the Ro of different shale samples after thermal simulation at the same preset temperature in the thermal simulation experiment of the hydrocarbon retention amount and hydrocarbon production amount. The residual oil and gas generation amounts, the oil and gas retention amounts and the oil and gas yields in the shale thermal simulation are correlated with Ro. In order to facilitate the corresponding study on the shale thermal evolution level under the formation conditions, the simulation temperature is converted into the corresponding Ro value.

$$Ro = a_1 e^{b_1 T} \quad (1)$$

In the equation, Ro denotes a vitrinite reflectance, %; T denotes a pyrolysis simulate temperature, °C; $a_1$ and $b_1$ denote empirical coefficients, which may be 0.13797, 0.005667, respectively.

In a specific implementation, the relationship represented by the above equation (1) can be as shown in FIG. 2.

II. Secondly, the process of establishing each model according to the data obtained from the thermal simulation process described in the above "I" is introduced.

The steps of establishing a model for predicting original TOC and a model for predicting original HI according to the values of Ro, HI and TOC of the shale that are obtained by using different simulation temperatures are introduced.

The reason why the above plurality of different shale samples are the ones having Ro values less than 0.5% is to facilitate establishing the model for predicting original TOC and the model for predicting original HI. The specific reason is: the organic matter in the shale having the Ro less than 0.5% does basically not undergo an oil and gas conversion, thus it can be called as an original state. The residual oil and gas generation amounts, the oil and gas retention amounts and the oil and gas yields in the in-situ conversion are evaluated by the original TOC and the original HI. The shale suitable for in-situ conversion in the actual formation is not necessarily in the original state, and the relevant parameters need to be restored to the original state. The evaluation models of the original TOC and the original HI (the following equation (2): the model for predicting original HI; and the following equation (3): the model for predicting original TOC) are established based on the thermal simulation experiment data through a HI change rate and a TOC change rate. The HI change rate refers to a ratio of the HI corresponding to a certain Ro value of the shale to its original HI, and the TOC change rate refers to a ratio of the TOC corresponding to a certain Ro value of the shale to its original TOC.

$$HI_o = \frac{HI}{a_2 \times e^{b_2 \times Ro}}; \quad (2)$$

wherein $HI_o$ denotes the original hydrogen index value (to be calculated) of the shale to be measured, mg/g.TOC; $HI$ denotes the HI value obtained by measuring the shale to be measured (i.e., a corresponding hydrogen index when the vitrinite reflectance of the shale is Ro) mg/g.TOC; Ro denotes the Ro value obtained by measuring the shale to be measured, $a_2$ and $b_2$ denote empirical coefficients, which may be 5.4792 and -3.0289 respectively when Ro≤1.0%; and may be 7.4206 and -3.2742 respectively when Ro>1.0%.

$$TOC_o = \frac{TOC}{f(a_{31})\ln(HT) + f(a_{32})}; \quad (3)$$

wherein,

$$HT = 10^{-3} \times HI_o \times TOC_o;$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases},$$

$$f(a_{32}) = b_{321}Ro^2 + b_{322}Ro + b_{323} \;,$$

wherein, $TOC_o$ denotes the original total organic carbon value (to be calculated) of the shale to be measured, wt%; $TOC$ denotes the TOC value obtained by measuring the shale to be measured, wt% (i.e., a corresponding total organic carbon value when the vitrinite reflectance of the shale is Ro); Ro denotes the Ro value obtained by measuring the shale to be measured; $HI_o$ denotes the original hydrogen index value (which can be obtained according to the above equation (2)) of the shale to be measured, mg/g.TOC; $b_{311}$, $b_{312}$, $b_{313}$, $b_{314}$, $b_{315}$, $b_{321}$, $b_{322}$ and $b_{323}$ denote empirical coefficients; $b_{311}$, $b_{312}$, $b_{313}$, $b_{314}$, $b_{315}$ may be 0.0324, 0.0177, 0.0064, -0.0356, 0.0096, respectively; $b_{321}$, $b_{322}$ and $b_{323}$ , may be 1.5838, 1.5862, 0.6134 respectively when Ro<1.0%, and may be -0.0422, 0.2407, 0.3670 respectively when Ro≥1.0%.

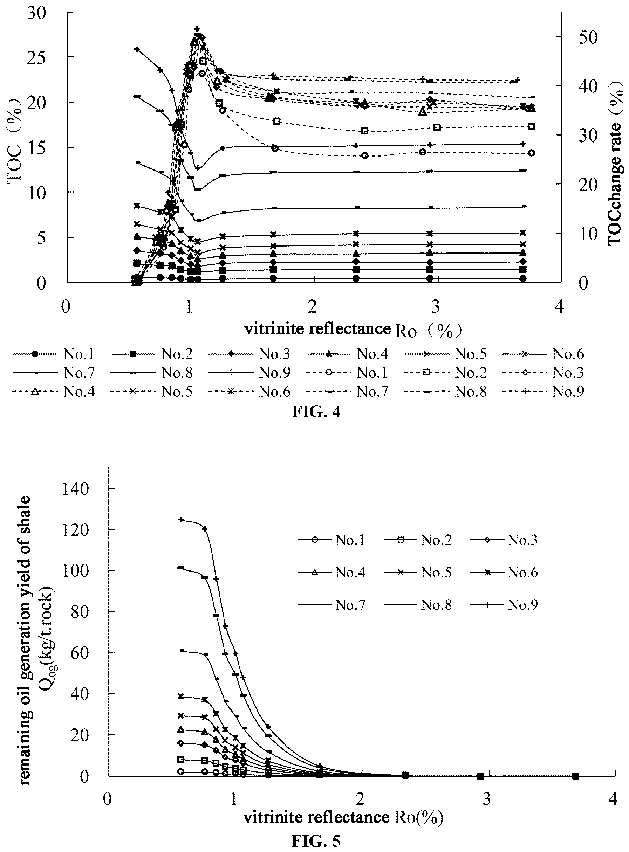

In a specific implementation, the technical solution provided in the examples overcomes the defects in the related art that the relevant oil and gas parameters can only be obtained by providing a simulation experiment. The evaluation models of HI and Ro (a relationship between HI and Ro, and the model that is as shown in FIG. 3), TOC and Ro (a relationship between TOC and Ro, and the model that is as shown in FIG. 4) of the shale with different kerogen types are adopted. In the model for predicting TOC, the influence of the change of HI is taken into account, thus the problems of predicting the original HI and the original TOC of shales with different kerogen types under different evolution levels are solved, and the defects in the related art that the original TOC can be recovered only according to the same kerogen type are overcome.

In a specific implementation, the kerogen type refers to that different organic matter compositions in shale (source rock) result in different oil-generating and gas-generating capacities, including type I, type II and type III. Herein, type I kerogen mainly involves oil-generating, type II kerogen involves oil-gas symbiosis and type III kerogen mainly involves gas-generating.

2. Secondly, the steps of pre-establishing evaluation models (the model for predicting residual oil generation amount in in-situ oil shale exploitation, and the model for predicting residual gas generation amount in in-situ oil shale exploitation ) of the residual oil generation amount and the residual gas generation amount of different shales under corresponding conditions of Ro, TOC and HI, according to data of residual oil generation amount and the residual gas generation amount obtained from the thermal simulation experiment, and the original TOC value, Ro value and the original HI value of the shale sample are introduced.

The residual oil generation amount of shale is related to the Ro, TOC and HI of shale, and the evaluation model of the residual oil generation amount is established based on the result of the thermal simulation experiment (the equation (4) below, and the model for predicting residual oil generation amount in in-situ oil shale exploitation, the relation is embodied in FIG. 5).

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}} \quad (4)$$

wherein, $Q_{og}$ denotes the residual oil generation amount (to be calculated) of the shale to be measured, kg/t.rock; $Q_{ogs}$ denotes the total oil generation amount (known) of shale samples in the thermal simulation experiment, kg/t.rock; Ro denotes the Ro value obtained by measuring the shale to be measured, %; $a_4$ and $b_4$ denote empirical coefficients, which may be 86.023 and -5.232, respectively; $TOC_{os}$ denotes an original total organic carbon value of the shale samples in the thermal simulation experiment ($Q_{ogs}$ corresponds the shale sample), wt%; $HI_{os}$ denotes the original hydrogen index value of the shale samples in the thermal simulation experiment ($Q_{ogs}$ corresponds the shale sample), mg/g.TOC; $TOC_{ot}$ denotes an original total organic carbon value of the shale to be measured, wt%; and $HI_{ot}$ denotes the original hydrogen index value of the shale to be measured, mg/g.TOC.

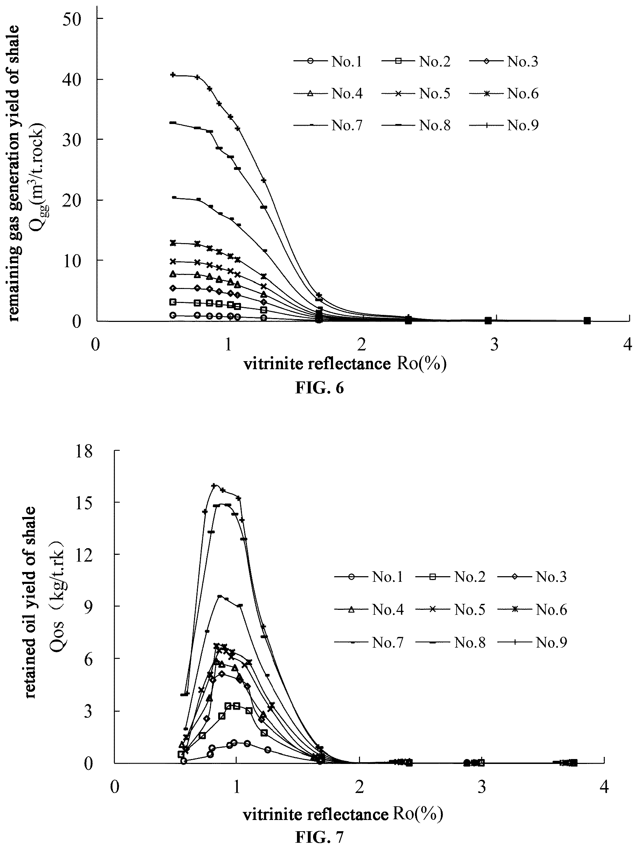

The residual gas generation amount of shale is related to the Ro, TOC and HI of the shale, and the evaluation model of the residual gas generation amount is established based on the data of the thermal simulation experiment (the equation (5) below, and the model for predicting residual gas generation amount in in-situ oil shale exploitation, the relation is embodied in FIG. 6).

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \le 1.6\% \\ a_{53} \times Ro^{b_{51}} & Ro > 1.6\% \end{cases} \quad (5)$$

wherein, $Q_{gg}$ denotes the residual gas generation amount (to be calculated) of the shale to be measured, m³/t.rock (20°C, 1 standard atmospheric pressure); $Q_{ggs}$ denotes the total residual gas generation amount (known) of shale samples in the thermal simulation experiment, $m^3/t.rock$ (20°C, 1 standard atmospheric pressure); Ro denotes the Ro value obtained by measuring the shale to be measured, %; $TOC_{os}$ denotes an original total organic carbon value (known) of shale samples in the thermal simulation experiment; $HI_{os}$ denotes the original hydrogen index value (known) of shale samples in the thermal simulation experiment ( $Q_{ggs}$ corresponds the shale sample); $TOC_{ot}$ denotes an original total organic carbon value (which can be obtained according to the above equation (3))of the shale to be measured; $HI_{ot}$ denotes the original hydrogen index value (which can be obtained according to the above equation (2)) of the shale to be measured; $a_{51}$, $a_{52}$, $a_{53}$ and $b_{51}$ denote empirical coefficients, which may be - 1.2157, 2.0333, 2.3623, -6.082, respectively.

In a specific implementation, the residual oil and gas generation amounts of in-situ conversion can be predicted accurately by using the above equations (3) and (4) in the examples.

3. Thirdly, the step of establishing an evaluation model of the oil and gas retention amounts (the model for predicting oil retention amount in in-situ oil shale exploitation, and the model for predicting gas retention amount in in-situ oil shale exploitation), according to the oil and gas retention amounts obtained from the thermal simulation experiment, and the original TOC value, Ro value and the original HI value of the shale sample is introduced.

According to the oil retention amount obtained from the thermal simulation experiment and TOC, Ro, HI data, an evaluation model of the oil retention amount is established (equation (6) below, the model for predicting oil retention amount in in-situ oil shale exploitation is as shown in FIG. 7).

$$Q_{os} = Q_{og} \times B_{or} \times \frac{HI_{ot}}{HI_{os}} \begin{cases} f(a_6) \times \ln(TOC_o) + f(b_6) & TOC \leq 8.5\% \\ f(c_6) \times TOC_o + f(d_6) & TOC > 8.5\% \end{cases} ; (6)$$

wherein, $Q_{os}$ denotes the oil retention amount (to be calculated) of the shale to be measured, kg/t.rock; $Q_{og}$ denotes the residual oil generation amount (known) of shale samples in the thermal simulation experiment; $TOC_o$ denotes an original total organic carbon value (which can be obtained according to the above equation (3)) of the shale to be measured, wt%; $f(a_6)$, $f(b_6)$, $f(c_6)$, $f(d_6)$ denote correction coefficients related to the Ro value of the shale to be measured, dimensionless; $B_{or}$ denotes a ratio of an oil volume factor at an actual formation pressure of a research area to which the shale to be measured belongs, to an oil volume factor at a pressure used in simulation, dimensionless; $HI_{os}$ denotes the original hydrogen index value (which can be obtained according to the above equation (2)) of the shale samples ( $Q_{og}$ corresponds to the shale samples) in the thermal simulation experiment; and $HI_{ot}$ denotes the original hydrogen index value of the shale to be measured (which can be obtained according to the above equation (2)).

Herein, the above calculation models of $f(a_6)$, $f(b_6)$, $f(c_6)$ have a consistent $f(abc)$ format, but have different empirical parameters (coefficients). $f(abc) = a_{61}Ro+a_{62}$; in this equation, $a_{61}$ and $a_{62}$ denote empirical parameters (coefficients), which are dimensionless.

wherein, the above

$$f(d_6) = \begin{cases} d_{61}Ro + d_{62} & Ro \leq 0.85\% \\ d_{63}Ro + d_{64}Ro^{0.5} + d_{65} & Ro > 0.85\% \end{cases} ;$$

in this equation, $d_{61}$, $d_{62}$, $d_{63}$, $d_{64}$ and $d_{65}$ denote empirical coefficients, which may be 0.5591, -0.2805, -0.0486, -0.1186, 0.3411, respectively.

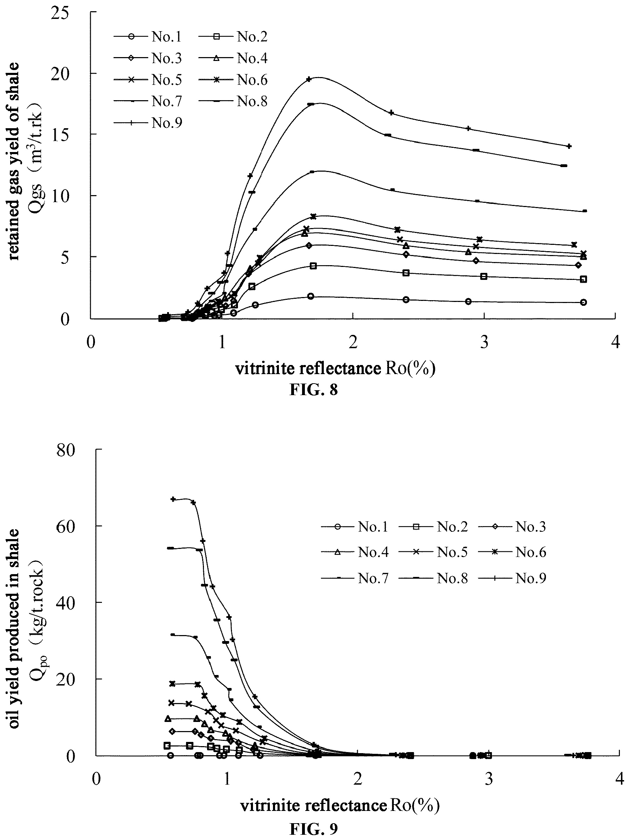

According to the gas retention amount obtained from the thermal simulation experiment and TOC, Ro, HI data, an evaluation model of the gas retention amount is established (equation (7) below, and the model for predicting gas retention amount in in-situ oil shale exploitation is as shown in FIG. 8).

$$Q_{gs} = Q_{gg} \times B_{gir} \times \frac{HI_{ot}}{HI_{os}} \times f(a_7) \times Ro^{f(b_7)} \qquad (7)$$

wherein,

$$f(a_7) = \begin{cases} c_{71} \times \ln(TOC_o) + c_{72} & TOC_o \leq 8.5\% \\ c_{73} \times TOC_o + c_{74} & TOC_o > 8.5\% \end{cases};$$

$TOC_o$ in this equation is the same as $TOC_o$ in the equation (3), and is also the same as $TOC_{ot}$ in the equations (4) and (5), $c_{71}$, $c_{72}$, $c_{73}$ and $c_{74}$ denote empirical coefficients, which may be -0.0866, 0.2948, 0.00119, 0.09075, respectively.

wherein,

$$f(b) = \begin{cases} c_{75} \times TOC_o{}^2 + c_{76} \times TOC_o + c_{77} & TOC \leq 3.5\% \\ c_{78} \times TOC + c_{79} & 3.5\% < TOC \leq 8.5\% \\ c_{710} \times TOC_o{}^3 + c_{711} \times TOC_o{}^2 + c_{712} \times TOC_o + c_{713} & TOC > 8.5\% \end{cases};$$

$c_{75}$, $c_{76}$, $c_{77}$, $c_{78}$, $c_{79}$, $c_{710}$, $c_{711}$, $c_{712}$ and $c_{713}$ denote empirical coefficients, which may be 0.0273, -0.1717, 6.9326, 0.0401, 6.5261, -0.00016, 0.00655, -0.10797, respectively.

wherein, $Q_{gs}$ denotes the gas retention amount (to be calculated) of the shale to be measured, m$^3$/t.rock (20°C, 1 standard atmospheric pressure); $Q_{gg}$ denotes the residual gas generation amount (known) of the shale samples in the thermal simulation experiment; $f(a_7)$ and $f(b_7)$ denote correction coefficients related to $TOC_o$ of the shale to be measured, dimensionless; $B_{gir}$ denotes a ratio of a gas deviation factor at an actual formation temperature and an actual formation pressure of a research area to which the shale to be measured belongs, to a gas deviation factor at a temperature and a pressure used in simulation, dimensionless; $HI_{os}$ denotes the original hydrogen index value (known) of the shale samples ($Q_{gg}$ corresponds to the shale sample) in the thermal simulation experiment; $HI_{ot}$ the original hydrogen index value of the shale to be measured (which can be obtained according to the above equation (2)); and $Ro$ denotes Ro obtained by measuring the shale to be measured.

In a specific implementation, the technical solution provided in the examples overcomes the defects in the related art that the relevant oil and gas parameters can only be obtained by providing a simulation experiment, establishes a relationship between the original TOC and the oil and gas retention amounts (the model for predicting oil retention amount in in-situ oil shale exploitation, and the model for predicting gas retention amount in in-situ oil shale exploitation), overcomes the defects in the related art that the proportions of the retained oil and gas for different original TOCs of shales cannot be evaluated (predicted), and can predict the oil retention amount and the gas retention amount corresponding to the original TOC and Ro values of different shales.

4. Finally, the step of establishing an evaluation model of the oil and gas yields (the model for predicting oil yield in in-situ oil shale exploitation, and the model for predicting gas yield in in-situ oil shale exploitation), according to the oil yield data obtained from the thermal simulation experiment, and the original TOC value, Ro value and the original HI value of the shale sample is introduced.

When the oil retention amount of the shale reaches saturation, the residual oil generation amount is the main contribution to the oil yield, and the oil yield is controlled mainly by the Ro, TOC and HI of the shale. The oil yield decreases with the increasing of the Ro and the decreasing of the residual oil generation amount. Under the same condition of Ro, the residual oil generation amount also increases with the increasing of the TOC and HI and the increasing of the oil yield.

The model for predicting oil yield in in-situ oil shale exploitation (as shown in Figure 9) is:

$$Q_{po} = (Q_{os} + Q_{og}) \times f(a_{81})Ro^2 + f(a_{82})Ro + f(a_{83}) \qquad (8)$$

wherein $f(a_{81})$, $f(a_{82})$, $f(a_{83})$ have such a calculation model:

$$f(a_8) = c_{81}HT^3 + c_{82}HT^2 + c_{83}HT + c_{84};$$

wherein, $Q_{po}$ denotes the oil yield (to be calculated) of the shale to be measured, kg/t.rock; $Q_{os}$ denotes the oil retention amount of the shale to be measured; $Q_{og}$ denotes the residual oil generation amount of the shale to be measured; Ro denotes the Ro value obtained by measuring the shale to be measured; $f(a_{81})$, $f(a_{82})$, $f(a_{83})$ denote correction coefficients related to the Ro value of the shale to be measured, $HI_o$ denotes the original hydrogen index value of the shale to be measured; $TOC_o$ denotes an original total organic carbon value of the shale to be measured; $c_{81}$, $c_{82}$, $c_{83}$ and $c_{84}$ denote empirical coefficients.

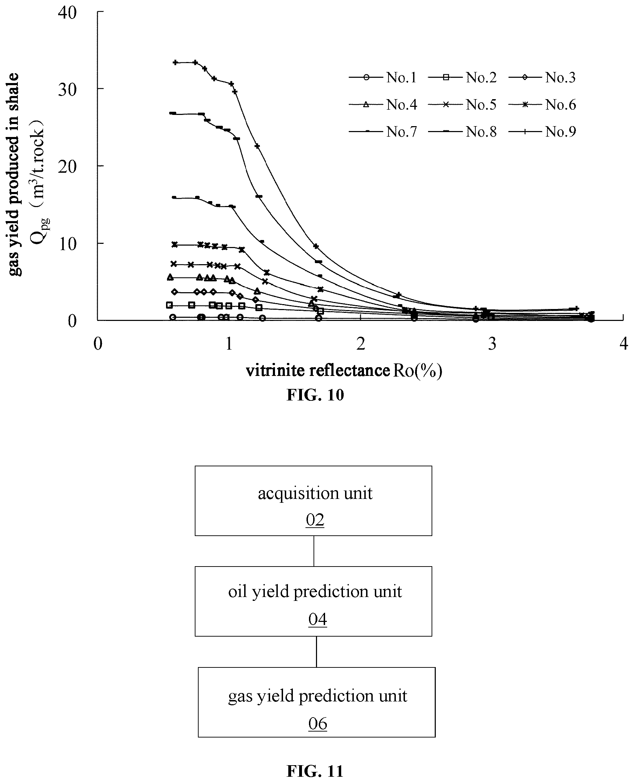

The gas yield is controlled mainly by the Ro, the TOC and the HI of the shale, and decreases with the increasing of the Ro. Due to the natural gas amount mainly resulted from temperature rise and expansion of the natural gas, a gas yield evaluation model is established based on data of the thermal simulation experiment (the following equation (10), and the model for predicting gas yield in in-situ oil shale exploitation, as shown in FIG. 10).

$$Q_{pg} = (Q_{gs} + Q_{gg}) \times f(a_{91}) \times HT^{f(b_{91})} \qquad (9)$$

wherein,

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases} ;$$

$$f(b_{91}) = c_{916}HT^2 + c_{917}HT + c_{918} ;$$

$$HT = 10^{-3} \times HI_o \times TOC_o ;$$

wherein, $Q_{pg}$ denotes the gas yield (to be calculated) of the shale to be measured, m3/t.rock; $Q_{gs}$ denotes the gas retention amount of the shale to be measured; $Q_{gg}$ denotes the residual gas generation amount of the shale sample; Ro denotes the Ro value obtained by measuring the shale to be measured; $HI_o$ denotes the original hydrogen index value of the shale to be measured, mg/g.TOC; $TOC_o$ denotes an original total organic carbon value of the shale to be measured, wt%; $f(a_{91})$ and $f(b_{91})$ denotes correction coefficients related to the Ro value of the shale to be measured; $c_{911}$, $c_{912}$, $c_{913}$, $c_{914}$, $c_{915}$, $c_{916}$, $c_{917}$, and $c_{918}$ denote empirical coefficients, wherein $c_{911}$, $c_{912}$, $c_{913}$, $c_{914}$, $c_{915}$ may be -105.345, 152.70, 4.461, 56.335, - 0.554, respectively; $c_{916}$, $c_{917}$, and $c_{918}$ may be 0.4796, -0.6434, 0.3387 respectively when Ro<1.25%, and may be -0.2302, 0.6061, -0.112 respectively when 1.25%≤Ro<2.35%, and may be 0.135, 0.7559, 1.0746, respectively when Ro<1.25%.

In a specific implementation, through the above equations (8) and (9), the technical solution provided in the examples solves the problem of quantitative evaluation and prediction of the oil yield and the gas yield in shale oil in-situ conversion having different original TOCs and Ros.

Since it takes a long time to simulate the oil and gas yields in shale under the condition of in-situ conversion, the data of the oil and gas yields in the shale oil in-situ conversion in the research area can be obtained by using the equations (1) to (9), for carrying out the evaluation and selective preference of a favorable region and a "dessert region".

III. Next, the process of performing the prediction of in-situ oil shale exploitation by using the models according to the above portion "II" is introduced.

The TOC, HI and Ro data of the target reservoir in the research area are collected, and the oil and gas yields in the shale oil in-situ conversion of the target reservoir in this area is obtained by using the above equations (1) to (9).

In the embodiments, the step of acquiring an original total organic carbon (TOC) value, a vitrinite reflectance (Ro) value and an original hydrogen index (HI) value of a shale to be measured may include the following steps of:

obtaining the original TOC value of the shale to be measured according to the TOC value and the Ro value obtained by measuring the shale to be measured and a pre-established model for predicting original TOC (which may be the above equation (3)), wherein the model for predicting original TOC is pre-established based on a TOC change rate obtained by performing a thermal simulation experiment on a plurality of different shale samples; and obtaining the original HI value of the shale to be measured according to the HI value and the Ro value obtained by measuring the shale to be measured and a pre-established model for predicting original HI (which may be the above equation (2)), wherein the model for predicting original HI is pre-established based on a HI change rate obtained by performing a thermal simulation experiment on a plurality of different shale samples.

In the embodiments, the above described methods for predicting oil and gas yields in in-situ oil shale exploitation may further comprise the following steps of:

obtaining a residual oil generation amount of the shale to be measured based on the original TOC value, the Ro value, the original HI value of the shale to be measured and a pre-established model (which may be the above equation (4)) for predicting the residual oil generation amount in the in-situ oil shale exploitation, wherein the model for predicting residual oil generation amount in in-situ oil shale exploitation is pre-established based on residual oil generation amount data obtained by performing a thermal simulation experiment on a plurality of different shale samples and the original TOC value, the Ro value and the original HI value of the shale samples; and

obtaining a residual gas generation amount of the shale to be measured based on the original TOC value, the Ro value, the original HI value of the shale to be measured, and a pre-established model for predicting residual gas generation amount in in-situ oil shale exploitation (which may be the above equation (5)), wherein the model for predicting residual gas generation amount in in-situ oil shale exploitation is pre-established based on residual gas generation amount data obtained by performing a thermal simulation experiment on a plurality of different shale samples and the original TOC value, the Ro value and the original HI value of the shale samples.

In the embodiments, the above described methods for predicting oil and gas yields in in-situ oil shale exploitation may further comprise the following steps of:

obtaining an oil retention amount of the shale to be measured based on the original TOC value, the Ro value, the original HI value of the shale to be measured and a pre-established model for predicting oil retention amount in in-situ oil shale exploitation (which may be the above equation (6)), wherein the model for predicting oil retention amount in in-situ oil shale exploitation is pre-established based on oil retention amount data obtained by performing a thermal simulation experiment on a plurality of different shale samples and the original TOC value, the Ro value and the original HI value of the shale samples; and

obtaining a gas retention amount of the shale to be measured based on the original TOC value, the Ro value, the original HI value of the shale to be measured and a pre-established model for predicting gas retention amount in in-situ oil shale exploitation (which may be the above equation (7)), wherein the model for predicting gas retention amount in in-situ oil shale exploitation is pre-established based on gas retention amount data obtained by performing a thermal simulation experiment on a plurality of different shale samples and the original TOC value, the Ro value and the original HI value of the shale sample.

Since it takes a long time to simulate the oil and gas yields of shale under the condition of in-situ conversion, the data of the oil and gas yields in the shale oil in-situ conversion in the research area (a research area to which the shale to be measured belongs) can be obtained by using the equations (1) to (9), for carrying out the evaluation and selective preference of a favorable region and a "dessert region".

According to the above models, the oil and gas generation amounts, the oil and gas retention amounts, and the oil and gas yields of the shale under the conditions of any Ro, TOC and HI can be obtained, and the quantitative evaluation can be realized.

According to the same inventive concept, an example further provides an apparatus for predicting oil and gas yields in in-situ oil shale exploitation, as described in the following examples. Since the principle adopted by the apparatus for predicting oil and gas yields in in-situ oil shale exploitation to solve problems is similar to the principle adopted by the method for predicting oil and gas yields in in-situ oil shale exploitation, the implementations of the apparatus for predicting oil and gas yields in in-situ oil shale exploitation can be seen by referring to the implementations of the method for predicting oil and gas yields in in-situ oil shale exploitation, which will not be repeatedly described in detail. As used below, the term "unit" or "module" can realize a combination of software and/or hardware with predetermined functions. Although the apparatus described in the following example is preferably implemented by software, hardware, or a combination of software and hardware is also possible and conceivable.

FIG. 11 is a schematic diagram of a structure of an apparatus for predicting oil and gas yields in in-situ oil shale exploitation according to an embodiment of the present invention. As shown in FIG. 11, the apparatus comprises:

an acquisition unit 02 configured to acquire an original total organic carbon (TOC) value, a vitrinite reflectance (Ro) value and an original hydrogen index (HI) value of a shale to be measured;

an oil yield prediction unit 04 configured to obtain an oil yield of the shale to be measured based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples; and

a gas yield prediction unit 06 configured to obtain a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples.

In an embodiment, the acquisition unit may specifically be configured to:

obtain the original TOC value of the shale to be measured according to the TOC value and the Ro value obtained by measuring the shale to be measured and a pre-established model for predicting original TOC, wherein the model for predicting original TOC is pre-established based on a TOC change rate obtained by performing a thermal simulation experiment on a plurality of different shale samples; and
obtain the original HI value of the shale to be measured according to the HI value and the Ro value obtained by measuring the shale to be measured and a pre-established model for predicting original HI, wherein the model for predicting original HI is pre-established based on a HI change rate obtained by performing a thermal simulation experiment on a plurality of different shale samples.

In an embodiment, the model for predicting original HI may be:

$$HI_o = \frac{HI}{a_2 \times e^{b_2 \times Ro}};$$

wherein $HI_o$ denotes the original hydrogen index value of the shale to be measured; $HI$ denotes the HI value obtained by measuring the shale to be measured; Ro denotes the Ro value obtained by measuring the shale to be measured, and $a_2$ and $b_2$ denote empirical coefficients.

In an embodiment, the model for predicting original TOC may be:

$$TOC_o = \frac{TOC}{f(a_{31})\ln(HT) + f(a_{32})};$$

wherein,

$$HT = 10^{-3} \times HI_o \times TOC_o;$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases};$$

$$f(a_{32}) = b_{321}Ro^2 + b_{322}Ro + b_{323};$$

$TOC_o$ denotes the original total organic carbon value of the shale to be measured; $TOC$ denotes the TOC value obtained by measuring the shale to be measured; Ro denotes the Ro value obtained by measuring the shale to be measured; $HI_o$ denotes the original hydrogen index value of the shale to be measured; and $b_{311}$, $b_{312}$, $b_{313}$, $b_{314}$, $b_{315}$, $b_{321}$, $b_{322}$ and $b_{323}$ denote empirical coefficients.

In an embodiment, the above described apparatus for predicting oil and gas yields in in-situ oil shale exploitation may further comprise:

a residual oil generation amount prediction unit configured to obtain a residual oil generation amount of the shale to be measured based on the original TOC value, the Ro value, the original HI value of the shale to be measured and a pre-established model for predicting residual oil generation amount in in-situ oil shale exploitation, wherein the model for predicting residual oil generation amount in in-situ oil shale exploitation is pre-established based on residual oil generation amount data obtained by performing a thermal simulation experiment on a plurality of different shale samples and the original TOC value, the Ro value and the original HI value of the shale samples; and

a residual gas generation amount prediction unit configured to obtain a residual gas generation amount of the shale to be measured based on the original TOC value, the Ro value, the original HI value of the shale to be measured, and a pre-established model for predicting residual gas generation amount in in-situ oil shale exploitation, wherein the model for predicting residual gas generation amount in in-situ oil shale exploitation is pre-established based on residual gas generation amount data obtained by performing a thermal simulation experiment on a plurality of different shale samples and the original TOC value, the Ro value and the original HI value of the shale samples.

In an embodiment, the model for predicting residual oil generation amount in in-situ oil shale exploitation may be:

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}} ;$$

wherein $Q_{og}$ denotes the residual oil generation amount of the shale to be measured; $Q_{ogs}$ denotes the total oil generation amount of the shale samples in the thermal simulation experiment; Ro denotes the Ro value obtained by measuring the shale to be measured; $a_4$ and $b_4$ denote empirical coefficients; $TOC_{os}$ denotes the original total organic carbon value of the shale samples in the thermal simulation experiment; $HI_{os}$ denotes the original hydrogen index value of the shale samples in the thermal simulation experiment; $TOC_{ot}$ denotes the original total organic carbon value of the shale to be measured; and $HI_{ot}$ denotes the original hydrogen index value of the shale to be measured.

In an embodiment, the model for predicting residual gas generation amount in in-situ oil shale exploitation may be:

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \leq 1.6\% \\ a_{53} \times Ro^{b_{51}} & Ro > 1.6\% \end{cases} ;$$

wherein, $Q_{gg}$ denotes the residual gas generation amount of the shale to be measured; $Q_{ggs}$ denotes the total residual gas generation amount of the shale samples in the thermal simulation experiment; Ro denotes the Ro value obtained by measuring the shale to be measured; $TOC_{os}$ denotes the original total organic carbon value of the shale samples in the thermal simulation experiment; $HI_{os}$ denotes the original hydrogen index value of the shale samples in the thermal simulation experiment; $TOC_{ot}$ denotes the original total organic carbon value of the shale to be measured; $HI_{ot}$ denotes the original hydrogen index value of the shale to be measured; and $a_{51}$, $a_{52}$, $a_{53}$ and $b_{51}$ denote empirical coefficients.

In an embodiment, the above described apparatus for predicting oil and gas yields in in-situ oil shale exploitation may further comprise:

an oil retention amount prediction unit configured to obtain an oil retention amount of the shale to be measured based on the original TOC value, the Ro value, the original HI value of the shale to be measured and a pre-established model for predicting oil retention amount in in-situ oil shale exploitation, wherein the model for predicting oil retention amount in in-situ oil shale exploitation is pre-established based on oil retention amount data obtained by performing a thermal simulation experiment on a plurality of different shale samples and the original TOC value, the Ro value and the original HI value of the shale samples; and

a gas retention amount prediction unit configured to obtain a gas retention amount of the shale to be measured based on the original TOC value, the Ro value, the original HI value of the shale to be measured and a pre-established model for predicting gas retention amount in in-situ oil shale exploitation, wherein the model for predicting gas retention amount in in-situ oil shale exploitation is pre-established based on gas retention amount data obtained by performing a thermal simulation experiment on a plurality of different shale samples and the original TOC value, the Ro value and the original HI value of the shale sample.

In an embodiment, the model for predicting oil retention amount in in-situ oil shale exploitation may be:

$$Q_{os} = Q_{og} \times B_{or} \times \frac{HI_{ot}}{HI_{os}} \begin{cases} f(a_6) \times \ln(TOC_o) + f(b_6) & TOC \leq 8.5\% \\ f(c_6) \times TOC_o + f(d_6) & TOC > 8.5\% \end{cases} ;$$

wherein $Q_{os}$ denotes the oil retention amount of the shale to be measured; $Q_{og}$ denotes the residual oil generation amount of the shale samples in the thermal simulation experiment; $TOC_o$ denotes the original total organic carbon value of the shale to be measured; $f(a_6)$, $f(b_b)$, $f(c_6)$, $f(d_6)$ denote correction coefficients related to the Ro value of the shale to be measured; $B_{or}$ denotes a ratio of an oil volume factor at an actual formation pressure in a research area to which the shale to be measured belongs, to an oil volume factor at a pressure used in a simulation; $HI_{os}$ denotes the original hydrogen index value of the shale samples in a thermal simulation experiment; and $HI_{ot}$ denotes the original hydrogen index value of the shale to be measured.

In an embodiment, the model for predicting gas retention amount in in-situ oil shale exploitation may be:

$$Q_{gs} = Q_{gg} \times B_{gir} \times \frac{HI_{ot}}{HI_{os}} \times f(a_7) \times Ro^{f(b_7)} ;$$

wherein, $Q_{gs}$ denotes the gas retention amount of the shale to be measured; $Q_{gg}$ denotes the residual gas generation amount of the shale samples in a thermal simulation experiment; $f(a_7)$ and $f(b_7)$ denote correction coefficients related to $TOC_o$ of the shale to be measured; $B_{gir}$ denotes a ratio of a gas deviation factor at an actual formation temperature and an actual pressure in a research area to which the shale to be measured belongs, to a gas deviation factor at a temperature and a pressure used in a simulation, $HI_{os}$ denotes the original hydrogen index value of the shale samples in a thermal simulation experiment; $HI_{ot}$ denotes the original hydrogen index value of the shale to be measured; and Ro denotes the Ro value obtained by measuring the shale to be measured.

In an embodiment, the model for predicting oil yield produced in the in-situ oil shale exploitation may be:

$$Q_{po} = (Q_{os} + Q_{og}) \times f(a_{81})Ro^2 + f(a_{82})Ro + f(a_{83})$$

$$f(a_8) = c_{81}HT^3 + c_{82}HT^2 + c_{83}HT + c_{84} ;$$

$$HT = 10^{-3} \times HI_o \times TOC_o ;$$

wherein, $Q_{po}$ denotes the oil yield of the shale to be measured; $Q_{os}$ denotes the oil retention amount of the shale to be measured; $Q_{og}$ denotes the residual oil generation amount of the shale to be measured; Ro denotes the Ro value obtained by measuring the shale to be measured; $f(a_{81})$, $f(a_{82})$, $f(a_{83})$ denote correction coefficients related to the Ro value of the shale to be measured, $HI_o$ denotes the original hydrogen index value of the shale to be measured; $TOC_o$ denotes the original total organic carbon value of the shale to be measured; and $c_{81}$, $c_{82}$, $c_{83}$ and $c_{84}$ denote empirical coefficients.

In an embodiment, the model for predicting gas yield produced in the in-situ oil shale exploitation may be:

$$Q_{pg} = (Q_{gs} + Q_{gg}) \times f(a_{91}) \times HT^{f(b_{91})} ;$$

wherein

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases} ;$$

$$f(b_{91}) = c_{916}HT^2 + c_{917}HT + c_{918};$$

$$HT = 10^{-3} \times HI_o \times TOC_o;$$

$Q_{pg}$ denotes the gas yield of the shale to be measured; $Q_{gs}$ denotes the gas retention amount of the shale to be measured; $Q_{gg}$ denotes the residual gas generation amount of the shale to be measured; Ro denotes the Ro value obtained by measuring the shale to be measured; $HI_o$ denotes the original hydrogen index value of the shale to be measured; $TOC_o$ denotes the original total organic carbon value of the shale to be measured; $f(a_{91})$ and $f(b_{91})$ denote correction coefficients related to the Ro value of the shale to be measured; and $c_{911}$, $c_{912}$, $c_{913}$, $c_{914}$, $c_{915}$, $c_{916}$, $c_{917}$, and $c_{918}$ denote empirical coefficients.

Embodiments of the present invention also provide a computer device including a memory, a processor, and a computer program stored in the memory and executable by the processor, and the processor implements, when executing the computer program, the methods for predicting oil and gas yields in in-situ oil shale exploitation as described above.

Embodiments of the present invention also provide a computer readable storage medium storing therein a computer program for performing the method for predicting oil and gas yields in in-situ oil shale exploitation as described above.

The technical solution provided in the embodiments of the present invention achieves the following advantageous technical effects:
In the technical solution provided in the embodiments of the present invention, the original TOC, the original HI and the Ro of the shale are adopted to establish models of an oil generation amount, a residual gas generation amount, an oil retention amount, a gas retention amount, an oil yield and a gas yield, so as to overcome the defects in the related art that a model is established by taking only a single factor of shale into account and relevant oil and gas parameters of shale samples can be obtained more truly, and to overcome the defects in the related art that the models are established respectively according to different TOCs, without considering the difference between different kerogen types. According to a calibration of thermal simulation results of the original TOC, the original HI, and the Ro of a shale sample, after obtaining the original TOC, original HI, and Ro parameters of the evaluated (to be measured) shale, the oil generation amount, the gas generation amount, the oil retention amount, the gas retention amount, the oil yield and the gas yield of the evaluated shale can be accurately obtained, and the needs of evaluation of the shale oil in-situ conversion can be satisfied, so as to overcome the defects in the related art that the relevant oil and gas parameters can only be obtained by providing a simulation experiment. The relationship between the original TOC and the oil and gas retention amounts is established, so as to overcome the defects in the related art that the proportions of the retained oil and gas for different original TOC of shales cannot be evaluated. The prediction models of HI and Ro, TOC and Ro of the shale having different kerogen types are adopted, the influence of the change of HI is taken into account in the TOC prediction model, thus the difficulty of predicting the original HI and the original TOC of shales having different kerogen types under different evolution levels is solved, and the defects in the related art that the original TOC can only be recovered according to the same kerogen type are overcome. The technical solution provided in the present invention solves the problems of quantitative evaluation and prediction of the oil retention amount and the gas retention amount for the original TOC and Ro, as well as the oil yield and the gas yield produced in shale oil in-situ conversion having different original TOC and Ro, and improves the precision of prediction of the oil and gas yields in the shale oil in-situ conversion, so as to be able to meet the needs of evaluation and prediction of the oil and gas yields in the shale oil in-situ conversion, evaluation and prediction of oil and gas yields in the oil and gas of shale, and evaluation of oil and gas resources, and the like.

Because the original TOC, Ro, original HI and other similar characteristic parameters of shale in the same region or horizon, or in different regions or horizons are very different, it takes a long time to obtain the oil yield and the gas yield in simulating the in-situ conversion conditions. Reliable data of "dessert region" evaluation of shale oil in-situ conversion of the target reservoir in the research area can be obtained only after simulating all the shale samples having different original TOCs, Ros and original HIs, which takes a very long time and a high cost. After the parameters such as the original TOC, the Ro and the original HI of the shale of the target reservoir in the research area are acquired, by utilizing the quantitative evaluation (prediction) model obtained in the present invention, the oil generation amount, the residual gas generation amount, the oil retention amount, the gas retention amount, the oil yield and the gas yield of the shale of the target reservoir in the research area can be accurately obtained, and evaluation and selective preference of "dessert region" of shale oil in-situ conversion can be performed rapidly.

In conclusion, the technical solution provided in the embodiments of the present invention realizes a quantitative prediction of the oil and gas yields in the in-situ oil shale exploitation, and improves the accuracy and efficiency of prediction of the oil and gas yields in the in-situ oil shale exploitation.

Persons skilled in the art should understand that, the examples can be provided as a method, a system or a computer program product. Therefore, the present invention can adopt the forms of a full hardware implementation, a full software implementation, or a combination of a software implementation and a hardware implementation. Moreover, the present invention can adopt the form of a computer program product that is implemented on one or more computer-usable storage medium (including but not limited to a disk memory, a CD-ROM, an optical memory, etc.) including computer-usable program codes.

The invention is described with reference to flow diagrams and/or block diagrams of the method, the device (system) and the computer program product according to the examples. It should be understood that each flow and/or block in the flow diagrams and/or block diagrams, and the combination of the flows and/or blocks in the flow diagrams and/or block diagrams can be achieved by computer program commands. These computer program commands can be provided to a CPU of a general-purpose computer, a special-purpose computer, an embedded processor or other programmable data processing device to produce a machine, so that a device for achieving functions designated in one or more flows in the flow diagrams and/or one or more blocks in the block diagrams can be generated by the command executed by the CPU of the computer or other programmable data processing device.

These computer program commands can also be stored in a computer-readable memory that can guide a computer or other programmable data processing device to operate in a special way, so that the commands stored in the computer-readable memory generate a manufactured product including a command device which achieves functions designated in one or more flows in the flow diagrams and/or one or more blocks in the block diagrams.

These computer program commands can also be loaded on a computer or other programmable data processing device, on which a series of operation steps are executed to generate processing achieved by the computer, so that the command executed on the computer or other programmable data processing device is provided for being used in the steps of achieving functions designated in one or more flows in the flow diagrams and/or one or more blocks in the block diagrams.

The foregoing is merely examples and is not intended to limit the present invention, and various modifications and variations can be made to the example by those skilled in the art. It should be noted and understood that there can be improvements and modifications made of the present invention described in detail above without departing from the scope of the invention as set forth in the accompanying claims.

**Claims**

1. A computer-implemented method for predicting oil and gas yields in in-situ oil shale exploitation, comprising:

   acquiring (101) an original total organic carbon (TOC) value, a vitrinite reflectance (Ro) value and an original hydrogen index (HI) value of a shale to be measured;
   obtaining (102) an oil yield of the shale to be measured based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples; and
   obtaining (103) a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples;
   wherein acquiring (101) the original total organic carbon (TOC) value, the vitrinite reflectance (Ro) value and the original hydrogen index (HI) value of the shale to be measured comprises: obtaining the original TOC value of the shale to be measured based on a TOC value and a Ro value obtained by measuring the shale to be measured and a pre-established model for predicting original TOC, wherein the model for predicting original TOC is pre-established based on a TOC change rate obtained by performing a thermal simulation experiment on a plurality of different shale samples; and obtaining the original HI value of the shale to be measured based on a HI value and a Ro value obtained by measuring the shale to be measured and a pre-established model for predicting original HI, wherein the model for predicting original HI is pre-established based on a HI change rate obtained by performing a thermal simulation experiment on a plurality of different shale samples;
   wherein the model for predicting original HI is:

$$HI_o = \frac{HI}{a_2 \times e^{b_2 \times Ro}};$$

wherein $HI_o$ denotes the original HI value of the shale to be measured; $HI$ denotes the HI value obtained by measuring the shale to be measured; Ro denotes the Ro value obtained by measuring the shale to be measured, and $a_2$ and $b_2$ denote empirical coefficients.

2. The method for predicting oil and gas yields in in-situ oil shale exploitation according to claim 1, wherein the model for predicting original TOC is:

$$TOC_o = \frac{TOC}{f(a_{31})\ln(HT) + f(a_{32})};$$

wherein

$$HT = 10^{-3} \times HI_o \times TOC_o;$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases};$$

$$f(a_{32}) = b_{321}Ro^2 + b_{322}Ro + b_{323};$$

$TOC_o$ denotes the original TOC value of the shale to be measured; $TOC$ denotes the TOC value obtained by measuring the shale to be measured; Ro denotes the Ro value obtained by measuring the shale to be measured; $HI_o$ denotes the original HI value of the shale to be measured; and $b_{311}$, $b_{312}$, $b_{313}$, $b_{314}$, $b_{315}$, $b_{321}$, $b_{322}$ and $b_{323}$ denote empirical coefficients.

3. The method for predicting oil and gas yields in in-situ oil shale exploitation according to claim 1, further comprising:

obtaining a residual oil generation amount of the shale to be measured based on the original TOC value, the Ro value, the original HI value of the shale to be measured and a pre-established model for predicting residual oil generation amount in in-situ oil shale exploitation, wherein the model for predicting residual oil generation amount in in-situ oil shale exploitation is pre-established based on residual oil generation amount data obtained by performing a thermal simulation experiment on a plurality of different shale samples and the original TOC value, the Ro value and the original HI value of the shale samples; and
obtaining a residual gas generation amount of the shale to be measured based on the original TOC value, the Ro value, the original HI value of the shale to be measured and a pre-established model for predicting residual gas generation amount in in-situ oil shale exploitation, wherein the model for predicting residual gas generation amount in in-situ oil shale exploitation is pre-established based on residual gas generation amount data obtained by performing a thermal simulation experiment on a plurality of different shale samples and the original TOC value, the Ro value and the original HI value of the shale samples.

4. The method for predicting oil and gas yields in in-situ oil shale exploitation according to claim 3, wherein the model for predicting residual oil generation amount in in-situ oil shale exploitation is:

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}};$$

wherein $Q_{og}$ denotes the residual oil generation amount of the shale to be measured; $Q_{ogs}$ denotes a total oil generation amount of the shale samples in the thermal simulation experiment; Ro denotes the Ro value obtained by measuring the shale to be measured; $a_4$ and $b_4$ denote empirical coefficients; $TOC_{os}$ denotes the original TOC value of the shale samples in the thermal simulation experiment; $HI_{os}$ denotes the original HI value of the shale samples in the thermal simulation experiment; $TOC_{ot}$ denotes the original TOC value of the shale to be measured; and $HI_{ot}$ denotes the original HI value of the shale to be measured.

5. The method for predicting oil and gas yields in in-situ oil shale exploitation according to claim 3, wherein the model for predicting residual gas generation amount in in-situ oil shale exploitation is:

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \leq 1.6\% \\ a_{53} \times Ro^{b_{51}} & Ro > 1.6\% \end{cases};$$

wherein, $Q_{gg}$ denotes the residual gas generation amount of the shale to be measured; $Q_{ggs}$ denotes a total residual gas generation amount of the shale samples in the thermal simulation experiment; Ro denotes the Ro value obtained by measuring the shale to be measured; $TOC_{os}$ denotes the original TOC value of the shale samples in the thermal simulation experiment; $HI_{os}$ denotes the original HI value of the shale samples in the thermal simulation experiment; $TOC_{ot}$ denotes the original TOC value of the shale to be measured; $HI_{ot}$ denotes the original HI value of the shale to be measured; and $a_{51}$, $a_{52}$, $a_{53}$ and $b_{51}$ denote empirical coefficients.

6. The method for predicting oil and gas yields in in-situ oil shale exploitation according to claim 1, further comprising:

obtaining an oil retention amount of the shale to be measured based on the original TOC value, the Ro value, the original HI value of the shale to be measured and a pre-established model for predicting oil retention amount in in-situ oil shale exploitation, wherein the model for predicting oil retention amount in in-situ oil shale exploitation is pre-established based on oil retention amount data obtained by performing a thermal simulation experiment on a plurality of different shale samples and the original TOC value, the Ro value and the original HI value of the shale samples; and
obtaining a gas retention amount of the shale to be measured based on the original TOC value, the Ro value, the original HI value of the shale to be measured and a pre-established model for predicting gas retention amount in in-situ oil shale exploitation, wherein the model for predicting gas retention amount in in-situ oil shale exploitation is pre-established based on gas retention amount data obtained by performing a thermal simulation experiment on a plurality of different shale samples and the original TOC value, the Ro value and the original HI value of the shale sample.

7. The method for predicting oil and gas yields in in-situ oil shale exploitation according to claim 6, wherein the model for predicting oil retention amount in in-situ oil shale exploitation is:

$$Q_{os} = Q_{og} \times B_{or} \times \frac{HI_{ot}}{HI_{os}} \begin{cases} f(a_6) \times \ln(TOC_o) + f(b_6) & TOC \leq 8.5\% \\ f(c_6) \times TOC_o + f(d_6) & TOC > 8.5\% \end{cases};$$

wherein $Q_{os}$ denotes the oil retention amount of the shale to be measured; $Q_{og}$ denotes a residual oil generation amount of the shale samples in the thermal simulation experiment; $TOC_o$ denotes the original total organic carbon value of the shale to be measured; $f(a_6)$, $f(b_6)$, $f(c_6)$, $f(d_6)$ denote correction coefficients related to the Ro value of the shale to be measured; $B_{or}$ denotes a ratio of an oil volume factor under an actual formation pressure in a research area to which the shale to be measured belongs, to an oil volume factor under a pressure used in the simulation; $HI_{os}$ denotes the original HI value of the shale samples in the thermal simulation experiment; and $HI_{ot}$ denotes the original HI value of the shale to be measured.

8. The method for predicting oil and gas yields in in-situ oil shale exploitation according to claim 6, wherein the model for predicting gas retention amount in in-situ oil shale exploitation is:

$$Q_{gs} = Q_{gg} \times B_{gir} \times \frac{HI_{ot}}{HI_{os}} \times f(a_7) \times Ro^{f(b_7)};$$

wherein, $Q_{gs}$ denotes the gas retention amount of the shale to be measured; $Q_{gg}$ denotes the residual gas generation amount of the shale samples in the thermal simulation experiment; $f(a_7)$ and $f(b_7)$ denote correction coefficients related to $TOC_o$ of the shale to be measured; $B_{gir}$ denotes a ratio of a gas deviation factor under an actual formation temperature and an actual pressure in a research area to which the shale to be measured belongs, to a gas deviation factor under a temperature and a pressure used in the simulation, $HI_{os}$ denotes the original HI value of the shale samples in the thermal simulation experiment; $HI_{ot}$ denotes the original HI value of the shale to be measured; and Ro denotes the Ro value obtained by measuring the shale to be measured.

9. The method for predicting oil and gas yields in in-situ oil shale exploitation according to claim 1, wherein the model for predicting oil yield in in-situ oil shale exploitation is:

$$Q_{po} = (Q_{os} + Q_{og}) \times f(a_{81})Ro^2 + f(a_{82})Ro + f(a_{83});$$

$$f(a_8) = c_{81}HT^3 + c_{82}HT^2 + c_{83}HT + c_{84};$$

$$HT = 10^{-3} \times HI_o \times TOC_o;$$

wherein, $Q_{po}$ denotes the oil yield of the shale to be measured; $Q_{os}$ denotes the oil retention amount of the shale to be measured; $Q_{og}$ denotes the residual oil generation amount of the shale to be measured; Ro denotes the Ro value obtained by measuring the shale to be measured; $f(a_{81})$, $f(a_{82})$, $f(a_{83})$ denote correction coefficients related to the Ro value of the shale to be measured, $HI_o$ denotes the original HI value of the shale to be measured; $TOC_o$ denotes the original TOC value of the shale to be measured; and $c_{81}$, $c_{82}$, $c_{83}$ and $c_{84}$ denote empirical coefficients.

10. The method for predicting oil and gas yields in in-situ oil shale exploitation according to claim 1, wherein the model for predicting gas yield in in-situ oil shale exploitation is:

$$Q_{pg} = (Q_{gs} + Q_{gg}) \times f(a_{91}) \times HT^{f(b_{91})};$$

wherein,

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases};$$

$$f(b_{91}) = c_{916}HT^2 + c_{917}HT + c_{918};$$

$$HT = 10^{-3} \times HI_o \times TOC_o;$$

$Q_{pg}$ denotes the gas yield of the shale to be measured; $Q_{gs}$ denotes the gas retention amount of the shale to be measured; $Q_{gg}$ denotes the residual gas generation amount of the shale to be measured; Ro denotes the Ro value obtained by measuring the shale to be measured; $HI_o$ denotes the original HI value of the shale to be measured; $TOC_o$ denotes the original TOC value of the shale to be measured; $f(a_{91})$ and $f(b_{91})$ denote correction coefficients related to the Ro value of the shale to be measured; and $c_{911}$, $c_{912}$, $c_{913}$, $c_{914}$, $c_{915}$, $c_{916}$, $c_{917}$, and $c_{918}$ denote empirical coefficients.

11. An apparatus for predicting oil and gas yields in in-situ oil shale exploitation, comprising:

an acquisition unit (02) configured to acquire an original total organic carbon (TOC) value, a vitrinite reflectance (Ro) value and an original hydrogen index (HI) value of a shale to be measured;
an oil yield prediction unit (04) configured to obtain an oil yield of the shale to be explore based on the original TOC value, the Ro value, the original HI value of the shale to be measured and a pre-established model for predicting oil yield in in-situ oil shale exploitation, wherein the model for predicting oil yield in in-situ oil shale exploitation is pre-established based on oil yield data obtained by performing a thermal simulation experiment on a plurality of different shale samples and the original TOC value, the Ro value and the original HI value of the shale samples; and
a gas yield prediction unit (06) configured to obtain a gas yield of the shale to be measured based on the original TOC value, the Ro value, the original HI value of the shale to be measured and a pre-established model for predicting gas yield in in-situ oil shale exploitation, wherein the model for predicting gas yield in in-situ oil shale exploitation is pre-established based on gas yield data obtained by performing a thermal simulation experiment on a plurality of different shale samples and the original TOC value, the Ro value and the original HI value of the shale samples, and
a processor configured to implement the method according to any one of claim 1 to 10.

12. A computer device comprising a memory, a processor and a computer program stored in the memory and executable by the processor, wherein the processor implements, when executing the computer program, the method according to any one of claims 1 to 10.

13. A computer-readable storage medium storing therein a computer program for performing the method according to any one of claims 1 to 10.

**Patentansprüche**

1. Computerimplementiertes Verfahren
zur Vorhersage von Öl- und Gasausbeuten bei der In-situ-Ölschiefergewinnung, umfassend:

Erfassen (101) eines Anfangswerts des gesamten organischen Kohlenstoffs (TOC), eines Werts der Vitrinitreflexion (Ro) und eines Anfangswerts des Wasserstoffindex (HI) eines zu messenden Schiefers;
Erhalten (102) einer Ölausbeute des zu messenden Schiefers basierend auf dem TOC-Anfangswert, dem Ro-Wert, dem HI-Anfangswert des zu messenden Schiefers und einem vorab festgelegten Modell zur Vorhersage der Ölausbeute bei der In-situ-Ölschiefergewinnung, wobei das Modell zur Vorhersage der Ölausbeute bei der In-situ-Ölschiefergewinnung basierend auf Ölausbeutedaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird; und
Erhalten (103) einer Gasausbeute des zu messenden Schiefers basierend auf dem TOC-Anfangswert, dem Ro-Wert, dem HI-Anfangswert des zu messenden Schiefers und einem vorab festgelegten Modell zur Vorhersage der Gasausbeute bei der In-situ-Ölschiefergewinnung, wobei das Modell zur Vorhersage der Gasausbeute bei der In-situ-Ölschiefergewinnung basierend auf Gasausbeutedaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird;
wobei das Erfassen (101) des Anfangswerts des gesamten organischen Kohlenstoffs (TOC), des Werts der Vitrinitreflexion (Ro) und des Anfangswerts des Wasserstoffindex (HI) des zu messenden Schiefers Folgendes umfasst: Erhalten des TOC-Anfangswerts des zu messenden Schiefers basierend auf einem TOC-Wert und einem Ro-Wert, die durch Messen des zu messenden Schiefers erhalten werden, und einem vorab festgelegten Modell zur Vorhersage des anfänglichen TOC, wobei das Modell zur Vorhersage des anfänglichen TOC basierend auf einer TOC-Änderungsrate, die durch Durchführen eines Versuchs für thermische Simulation an einer Vielzahl von verschiedenen Schieferproben erhalten wird, vorab festgelegt wird; und Erhalten des HI-Anfangswerts des zu messenden Schiefers basierend auf einem HI-Wert und einem Ro-Wert, die durch Messen des zu messenden Schiefers erhalten werden, und einem vorab festgelegten Modell zur Vorhersage des anfänglichen HI, wobei das Modell zur Vorhersage des anfänglichen HI basierend auf einer HI-Änderungsrate, die durch Durchführen eines Versuchs für thermische Simulation an einer Vielzahl von verschiedenen Schieferproben erhalten wird, vorab festgelegt wird;
wobei das Modell zur Vorhersage des anfänglichen HI Folgendes ist:

$$HI_o = \frac{HI}{a_2 \times e^{b_2 \times Ro}};$$

wobei $HI_o$ den HI-Anfangswert des zu messenden Schiefers bezeichnet; $HI$ den durch Messen des zu messenden Schiefers erhaltenen HI-Wert bezeichnet; Ro den durch Messen des zu messenden Schiefers erhaltenen Ro-Wert bezeichnet und $a_2$ und $b_2$ empirische Koeffizienten bezeichnen.

2. Verfahren zur Vorhersage von Öl- und Gasausbeuten bei der In-situ-Ölschiefergewinnung nach Anspruch 1, wobei das Modell zur Vorhersage des anfänglichen TOC Folgendes ist:

$$TOC_o = \frac{TOC}{f(a_{31})\ln(HT) + f(a_{32})};$$

wobei

$$HT = 10^{-3} \times HI_o \times TOC_o;$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases}$$

$$f(a_{32}) = b_{321}Ro^2 + b_{322}Ro + b_{323}$$

wobei $TOC_o$ den TOC-Anfangswert des zu messenden Schiefers bezeichnet; $TOC$ den durch Messen des zu messenden Schiefers erhaltenen TOC-Wert bezeichnet; Ro den durch Messen des zu messenden Schiefers erhaltenen Ro-Wert bezeichnet; $HI_o$ den HI-Anfangswert des zu messenden Schiefers bezeichnet und $b_{311}$, $b_{312}$, $b_{313}$, $b_{314}$, $b_{315}$, $b_{321}$, $b_{322}$ und $b_{323}$ empirische Koeffizienten bezeichnen.

3. Verfahren zur Vorhersage von Öl- und Gasausbeuten bei der In-situ-Ölschiefergewinnung nach Anspruch 1, ferner umfassend:

Erhalten einer Restölerzeugungsmenge des zu messenden Schiefers basierend auf dem TOC-Anfangswert, dem Ro-Wert, dem HI-Anfangswert des zu messenden Schiefers und einem vorab festgelegten Modell zur Vorhersage der Restölerzeugungsmenge bei der In-situ-Ölschiefergewinnung, wobei das Modell zur Vorhersage der Restölerzeugungsmenge bei der In-situ-Ölschiefergewinnung basierend auf Restölerzeugungsmengendaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird; und
Erhalten einer Restgaserzeugungsmenge des zu messenden Schiefers basierend auf dem TOC-Anfangswert, dem Ro-Wert, dem HI-Anfangswert des zu messenden Schiefers und einem vorab festgelegten Modell zur Vorhersage der Restgaserzeugungsmenge bei der In-situ-Ölschiefergewinnung, wobei das Modell zur Vorhersage der Restgaserzeugungsmenge bei der In-situ-Ölschiefergewinnung basierend auf Restgaserzeugungsmengendaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird.

4. Verfahren zur Vorhersage von Öl- und Gasausbeuten bei der In-situ-Ölschiefergewinnung nach Anspruch 3, wobei das Modell zur Vorhersage der Restölerzeugungsmenge bei der In-situ-Ölschiefergewinnung Folgendes ist:

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}}$$

wobei $Q_{og}$ die Restölerzeugungsmenge des zu messenden Schiefers bezeichnet; $Q_{ogs}$ eine Gesamtölerzeugungsmenge der Schieferproben in dem Versuch für thermische Simulation bezeichnet; Ro den Ro-Wert, der durch Messen des zu messenden Schiefers erhalten wird, bezeichnet; $a_4$ und $b_4$ empirische Koeffizienten bezeichnen;

$TOC_{os}$ den TOC-Anfangswert der Schieferproben in dem Versuch für thermische Simulation bezeichnet; $HI_{os}$ den HI-Anfangswert der Schieferproben in dem Versuch für thermische Simulation bezeichnet; $TOC_{ot}$ den TOC-Anfangswert des zu messenden Schiefers bezeichnet; und $HI_{ot}$ den HI-Anfangswert des zu messenden Schiefers bezeichnet.

5. Verfahren zur Vorhersage von Öl- und Gasausbeuten bei der In-situ-Ölschiefergewinnung nach Anspruch 3, wobei das Modell zur Vorhersage der Restgaserzeugungsmenge bei der In-situ-Ölschiefergewinnung Folgendes ist:

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \leq 1.6\% \\ a_{53} \times Ro^{b_{51}} & Ro > 1.6\% \end{cases};$$

wobei $Q_{gg}$ die Restgaserzeugungsmenge des zu messenden Schiefers bezeichnet; $Q_{ggs}$ eine Gesamtrestgaserzeugungsmenge der Schieferproben in dem Versuch für thermische Simulation bezeichnet; Ro den Ro-Wert, der durch Messen des zu messenden Schiefers erhalten wird, bezeichnet; $TOC_{os}$ den TOC-Anfangswert der Schieferproben in dem Versuch für thermische Simulation bezeichnet; $HI_{os}$ den HI-Anfangswert der Schieferproben in dem Versuch für thermische Simulation bezeichnet; $TOC_{ot}$ den TOC-Anfangswert des zu messenden Schiefers bezeichnet; $HI_{ot}$ den HI-Anfangswert des zu messenden Schiefers bezeichnet; und $a_{51}$, $a_{52}$, $a_{53}$ und $b_{51}$ empirische Koeffizienten bezeichnen.

6. Verfahren zur Vorhersage von Öl- und Gasausbeuten bei der In-situ-Ölschiefergewinnung nach Anspruch 1, ferner umfassend:

Erhalten einer Ölrückhaltemenge des zu messenden Schiefers basierend auf dem TOC-Anfangswert, dem Ro-Wert, dem HI-Anfangswert des zu messenden Schiefers und einem vorab festgelegten Modell zur Vorhersage der Ölrückhaltemenge bei der In-situ-Ölschiefergewinnung, wobei das Modell zur Vorhersage der Ölrückhaltemenge bei der In-situ-Ölschiefergewinnung basierend auf Ölrückhaltemengendaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird; und
Erhalten einer Gasrückhaltemenge des zu messenden Schiefers basierend auf dem TOC-Anfangswert, dem Ro-Wert, dem HI-Anfangswert des zu messenden Schiefers und einem vorab festgelegten Modell zur Vorhersage der Gasrückhaltemenge bei der In-situ-Ölschiefergewinnung, wobei das Modell zur Vorhersage der Gasrückhaltemenge bei der In-situ-Ölschiefergewinnung basierend auf Gasrückhaltemengendaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird.

7. Verfahren zur Vorhersage von Öl- und Gasausbeuten bei der In-situ-Ölschiefergewinnung nach Anspruch 6, wobei das Modell zur Vorhersage der Ölrückhaltemenge bei der In-situ-Ölschiefergewinnung Folgendes ist:

$$Q_{os} = Q_{og} \times B_{or} \times \frac{HI_{ot}}{HI_{os}} \begin{cases} f(a_6) \times \ln(TOC'_o) + f(b_6) & TOC' \leq 8.5\% \\ f(c_6) \times TOC'_o + f(d_6) & TOC' > 8.5\% \end{cases};$$

wobei $Q_{os}$ die Ölrückhaltemenge des zu messenden Schiefers bezeichnet; $Q_{og}$ eine Restölerzeugungsmenge der Schieferproben in dem Versuch für thermische Simulation bezeichnet; $TOC_o$ den Anfangswert des gesamten organischen Kohlenstoffs des zu messenden Schiefers bezeichnet; $f(a_6)$, $f(b_6)$, $f(c_6)$, $f(d_6)$ Korrekturkoeffizienten in Bezug auf den Ro-Wert des zu messenden Schiefers bezeichnen; $B_{or}$ ein Verhältnis von einem Ölvolumenfaktor unter einem tatsächlichen Formationsdruck in einem Forschungsgebiet, zu dem der zu messende Schiefer gehört, zu einem Ölvolumenfaktor unter einem Druck, der in der Simulation verwendet wird, bezeichnet; $HI_{os}$ den HI-Anfangswert der Schieferproben in dem Versuch für thermische Simulation bezeichnet; und $HI_{ot}$ den HI-Anfangswert des zu messenden Schiefers bezeichnet.

8. Verfahren zur Vorhersage von Öl- und Gasausbeuten bei der In-situ-Ölschiefergewinnung nach Anspruch 6, wobei das Modell zur Vorhersage der Gasrückhaltemenge bei der In-situ-Ölschiefergewinnung Folgendes ist:

$$Q_{gs} = Q_{gg} \times B_{gir} \times \frac{HI_{ot}}{HI_{os}} \times f(a_7) \times Ro^{f(b_7)} ;$$

wobei $Q_{gs}$ die Gasrückhaltemenge des zu messenden Schiefers bezeichnet; $Q_{gg}$ die Restgaserzeugungsmenge der Schieferproben in dem Versuch für thermische Simulation bezeichnet; $f(a_7)$ und $f(b_7)$ Korrekturkoeffizienten in Bezug auf $TOC_o$ des zu messenden Schiefers bezeichnen; $B_{gir}$ ein Verhältnis von einem Gasabweichungsfaktor unter einer tatsächlichen Formationstemperatur und einem tatsächlichen Druck in einem Forschungsgebiet, zu dem der zu messende Schiefer gehört, zu einem Gasabweichungsfaktor unter einer Temperatur und einem Druck, die in der Simulation verwendet werden, bezeichnet, $HI_{os}$ den HI-Anfangswert der Schieferproben in dem Versuch für thermische Simulation bezeichnet; $HI_{ot}$ den HI-Anfangswert des zu messenden Schiefers bezeichnet; und Ro den Ro-Wert, der durch Messen des zu messenden Schiefers erhalten wird, bezeichnet.

9. Verfahren zur Vorhersage von Öl- und Gasausbeuten bei der In-situ-Ölschiefergewinnung nach Anspruch 1, wobei das Modell zur Vorhersage der Ölausbeute bei der In-situ-Ölschiefergewinnung Folgendes ist:

$$Q_{po} = (Q_{os} + Q_{og}) \times f(a_{81})Ro^2 + f(a_{82})Ro + f(a_{83}) ;$$

$$f(a_8) = c_{81}HT^3 + c_{82}HT^2 + c_{83}HT +$$

$$HT = 10^{-3} \times HI \times TOC$$

wobei $Q_{po}$ die Ölausbeute des zu messenden Schiefers bezeichnet; $Q_{os}$ die Ölrückhaltemenge des zu messenden Schiefers bezeichnet; $Q_{og}$ die Restölerzeugungsmenge des zu messenden Schiefers bezeichnet; Ro den Ro-Wert, der durch Messen des zu messenden Schiefers erhalten wird, bezeichnet; $f(a_{81})$, $f(a_{82})$, $f(a_{83})$ Korrekturkoeffizienten in Bezug auf den Ro-Wert des zu messenden Schiefers bezeichnen, $HI_o$ den HI-Anfangswert des zu messenden Schiefers bezeichnet; $TOC_o$ den TOC-Anfangswert des zu messenden Schiefers bezeichnet; und $c_{81}$, $c_{82}$, $c_{83}$ und $c_{84}$ empirische Koeffizienten bezeichnen.

10. Verfahren zur Vorhersage von Öl- und Gasausbeuten bei der In-situ-Ölschiefergewinnung nach Anspruch 1, wobei das Modell zur Vorhersage der Gasausbeute bei der In-situ-Ölschiefergewinnung Folgendes ist:

$$Q_{pg} = (Q_{gs} + Q_{gg}) \times f(a_{91}) \times HT^{f(b_{91})} ;$$

wobei

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases} ;$$

$$f(b_{91}) = c_{916}HT^2 + c_{917}HT + c_{918} ;$$

$$HT = 10^{-3} \times HI_o \times TOC_o ;$$

$Q_{pg}$ die Gasausbeute des zu messenden Schiefers bezeichnet; $Q_{gs}$ die Gasrückhaltemenge des zu messenden Schiefers bezeichnet; $Q_{gg}$ die Restgaserzeugungsmenge des zu messenden Schiefers bezeichnet; Ro den Ro-Wert bezeichnet, der durch Messen des zu messenden Schiefers erhalten wird; $HI_o$ den HI-Anfangswert des zu messenden Schiefers bezeichnet; $TOC_o$ den TOC-Anfangswert des zu messenden Schiefers bezeichnet; $f(a_{91})$ und $f(b_{91})$ Korrekturkoeffizienten in Bezug auf den Ro-Wert des zu messenden Schiefers bezeichnen; und $c_{911}$, $c_{912}$, $c_{913}$, $c_{914}$, $c_{915}$, $c_{916}$, $c_{917}$, und $c_{918}$ empirische Koeffizienten bezeichnen.

**11.** Vorrichtung zur Vorhersage von Öl- und Gasausbeuten bei der In-situ-Ölschiefergewinnung, umfassend:

eine Erfassungseinheit (02), die konfiguriert ist, einen Anfangswert des gesamten organischen Kohlenstoffs (TOC), einen Wert der Vitrinitreflexion (Ro) und einen Anfangswert des Wasserstoffindex (HI) eines zu messenden Schiefers zu erfassen;
eine Ölausbeutevorhersageeinheit (04), die konfiguriert ist, eine Ölausbeute des zu messenden Schiefers basierend auf dem TOC-Anfangswert, dem Ro-Wert, dem HI-Anfangswert des zu messenden Schiefers und einem vorab festgelegten Modell zur Vorhersage der Ölausbeute bei der In-situ-Ölschiefergewinnung zu erhalten, wobei das Modell zur Vorhersage der Ölausbeute bei der In-situ-Ölschiefergewinnung basierend auf Ölausbeutedaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird; und
eine Gasausbeutevorhersageeinheit (06), die konfiguriert ist, eine Gasausbeute des zu messenden Schiefers basierend auf dem TOC-Anfangswert, dem Ro-Wert, dem HI-Anfangswert des zu messenden Schiefers und einem vorab festgelegten Modell zur Vorhersage der Gasausbeute bei der In-situ-Ölschiefergewinnung zu erhalten, wobei das Modell zur Vorhersage der Gasausbeute bei der In-situ-Ölschiefergewinnung basierend auf Gasausbeutedaten, die durch Durchführen eines Versuchs für thermische Simulation an einer Vielzahl von verschiedenen Schieferproben erhalten werden, und dem TOC-Anfangswert, dem Ro-Wert und dem HI-Anfangswert der Schieferproben vorab festgelegt wird, und
einen Prozessor, der konfiguriert ist, das Verfahren nach einem der Ansprüche 1 bis 10 zu implementieren.

**12.** Computergerät, das einen Speicher, einen Prozessor und ein Computerprogramm, das in dem Speicher gespeichert und durch den Prozessor ausführbar ist, umfasst, wobei der Prozessor, wenn er das Computerprogramm ausführt, das Verfahren nach einem der Ansprüche 1 bis 10 implementiert.

**13.** Computerlesbares Speichermedium, auf dem ein Computerprogramm zur Durchführung des Verfahrens nach einem der Ansprüche 1 bis 10 gespeichert ist.

**Revendications**

**1.** Procédé mis en œuvre par ordinateur de prédiction de rendements pétrolier et gazier dans l'exploitation de schiste bitumineux in situ, comprenant :

l'acquisition (101) d'une valeur de carbone organique total (TOC) d'origine, d'une valeur de réflectance de vitrinite (Ro) et d'une valeur d'index d'hydrogène (HI) d'origine d'un schiste à mesurer ;
l'obtention (102) d'un rendement pétrolier du schiste à mesurer sur la base de la valeur TOC d'origine, de la valeur Ro, de la valeur HI d'origine du schiste à mesurer et d'un modèle préétabli de prédiction de rendement pétrolier dans l'exploitation de schiste bitumineux in situ, dans lequel le modèle de prédiction de rendement pétrolier dans l'exploitation de schiste bitumineux in situ est préétabli sur la base de données de rendement pétrolier obtenues par réalisation d'une expérience de simulation thermique sur une pluralité d'échantillons de schiste différents et de la valeur TOC d'origine, de la valeur Ro et de la valeur HI d'origine des échantillons de schiste ; et
l'obtention (103) d'un rendement gazier du schiste à mesurer sur la base de la valeur TOC d'origine, de la valeur Ro, de la valeur HI d'origine du schiste à mesurer et d'un modèle préétabli de prédiction de rendement gazier dans l'exploitation de schiste bitumineux in situ, dans lequel le modèle de prédiction de rendement gazier dans l'exploitation de schiste bitumineux in situ est préétabli sur la base de données de rendement gazier obtenues par réalisation d'une expérience de simulation thermique sur une pluralité d'échantillons de schiste différents et de la valeur de TOC d'origine, de la valeur Ro et de la valeur HI d'origine des échantillons de schiste ;
dans lequel l'acquisition (101) de la valeur de carbone organique total (TOC) d'origine, de la valeur de réflectance de vitrinite (Ro) et de la valeur d'index d'hydrogène (HI) d'origine du schiste à mesurer comprend : l'obtention de la valeur TOC d'origine du schiste à mesurer sur la base d'une valeur TOC et d'une valeur Ro obtenues par mesure du schiste à mesurer et d'un modèle préétabli de prédiction de TOC d'origine, dans lequel le modèle de prédiction de TOC d'origine est préétabli sur la base d'une vitesse de changement de TOC obtenue par réalisation d'une expérience de simulation thermique sur une pluralité d'échantillons de schistes différents ; et l'obtention de la valeur HI d'origine du schiste à mesurer sur la base d'une valeur HI et d'une valeur Ro obtenues par mesure du schiste à mesurer et d'un modèle préétabli de prédiction de HI d'origine, dans lequel le modèle de prédiction de HI d'origine est préétabli sur la base d'une vitesse de changement de HI obtenue par réalisation d'une expérience de simulation thermique sur une pluralité d'échantillons de schiste différents ; dans lequel le modèle de prédiction de HI d'origine est :

$$HI_o = \frac{HI}{a_2 \times e^{b_2 \times Ro}}$$

dans lequel $HI_o$ désigne la valeur HI d'origine du schiste à mesurer ; $HI$ désigne la valeur HI obtenue par mesure du schiste à mesurer ; $Ro$ désigne la valeur Ro obtenue par mesure du schiste à mesurer, et $a_2$ et $b_2$ désignent des coefficients empiriques.

2. Procédé de prédiction de rendements pétrolier et gazier dans l'exploitation de schiste bitumineux in situ selon la revendication 1, dans lequel le modèle de prédiction de TOC d'origine est :

$$TOC_o = \frac{TOC}{f(a_{31})\ln(HT) + f(a_{32})};$$

où

$$HT = 10^{-3} \times HI_o \times TOC_o;$$

$$f(a_{31}) = \begin{cases} b_{311}Ro + b_{312} & Ro < 1.65\% \\ b_{313}Ro^2 + b_{314}Ro + b_{315} & Ro \geq 1.65\% \end{cases}$$

$$f(a_{32}) = b_{321}Ro^2 + b_{322}Ro + b_{323};$$

$TOC_o$ désigne la valeur TOC d'origine du schiste à mesurer ; $TOC$ désigne la valeur TOC obtenue par mesure du schiste à mesurer ; Ro désigne la valeur Ro obtenue par mesure du schiste à mesurer ; $HI_o$ désigne la valeur HI d'origine du schiste à mesurer ; et $b_{311}$, $b_{312}$, $b_{313}$, $b_{314}$, $b_{315}$, $b_{321}$, $b_{322}$ et $b_{323}$ désignent des coefficients empiriques.

3. Procédé de prédiction de rendements pétrolier et gazier dans l'exploitation de schiste bitumineux in situ selon la revendication 1, comprenant en outre :

l'obtention d'une quantité résiduelle de génération de pétrole du schiste à mesurer sur la base de la valeur TOC d'origine, de la valeur Ro, de la valeur HI d'origine du schiste à mesurer et d'un modèle préétabli de prédiction de quantité résiduelle de génération de pétrole dans l'exploitation de schiste bitumineux in situ, dans lequel le modèle de prédiction de quantité résiduelle de génération de pétrole dans l'exploitation de schiste bitumineux in situ est préétabli sur la base de données de quantité résiduelle de génération de pétrole obtenues par réalisation d'une expérience de simulation thermique sur une pluralité d'échantillons de schiste différents et de la valeur TOC d'origine, de la valeur Ro et de la valeur HI d'origine des échantillons de schiste ; et l'obtention d'une quantité résiduelle de génération de gaz du schiste à mesurer sur la base de la valeur de TOC d'origine, de la valeur Ro, de la valeur HI d'origine du schiste à mesurer et d'un modèle préétabli de prédiction de quantité résiduelle de génération de gaz dans l'exploitation de schiste bitumineux in situ, dans lequel le modèle de prédiction de quantité résiduelle de génération de gaz dans l'exploitation de schiste bitumineux in situ est préétabli sur la base de données de quantité résiduelle de génération de gaz obtenues par réalisation d'une expérience de simulation thermique sur une pluralité d'échantillons de schiste différents et de la valeur TOC d'origine, de la valeur Ro et de la valeur HI d'origine des échantillons de schiste.

4. Procédé de prédiction de rendements pétrolier et gazier dans l'exploitation de schiste bitumineux in situ selon la revendication 3, dans lequel le modèle de prédiction de quantité résiduelle de génération de pétrole dans l'exploitation de schiste bitumineux in situ est :

$$Q_{og} = Q_{ogs} \times a_4 \times e^{b_4 \times Ro} \times Ro^2 \times \frac{TOC_{ot}}{TOC_{os}} \times \frac{HI_{ot}}{HI_{os}} \; ;$$

où $Q_{og}$ désigne la quantité résiduelle de génération de pétrole du schiste à mesurer ; $Q_{ogs}$ désigne une quantité totale de génération de pétrole des échantillons de schiste dans l'expérience de simulation thermique ; Ro désigne la valeur Ro obtenue par mesure du schiste à mesurer ; $a_4$ et $b_4$ désignent des coefficients empiriques ; $TOC_{os}$ désigne la valeur TOC d'origine des échantillons de schiste dans l'expérience de simulation thermique ; $HI_{os}$ désigne la valeur HI d'origine des échantillons de schiste dans l'expérience de simulation thermique ; $TOC_{ot}$ désigne la valeur TOC d'origine du schiste à mesurer ; et $HI_{ot}$ désigne la valeur HI d'origine du schiste à mesurer.

5. Procédé de prédiction de rendements pétrolier et gazier dans l'exploitation de schiste bitumineux in situ selon la revendication 3, dans lequel le modèle de prédiction de quantité résiduelle de génération de gaz dans l'exploitation de schiste bitumineux in situ est :

$$Q_{gg} = Q_{ggs} \times \frac{TOC_{ot}}{TOC_{os}} \times \frac{HI_{ot}}{HI_{os}} \times \begin{cases} a_{51} \times Ro^{1.5} + a_{52} \times Ro^{0.5} & Ro \leq 1.6\% \\ a_{53} \times Ro^{b_{51}} & Ro > 1.6\% \end{cases} ;$$

où, $Q_{gg}$ désigne la quantité résiduelle de génération de gaz du schiste à mesurer ; $Q_{ggs}$ désigne une quantité totale résiduelle de génération de gaz des échantillons de schiste dans l'expérience de simulation thermique ; Ro désigne la valeur Ro obtenue par mesure du schiste à mesurer ; $TOC_{os}$ désigne la valeur TOC d'origine des échantillons de schiste dans l'expérience de simulation thermique ; $HI_{os}$ désigne la valeur HI d'origine des échantillons de schiste dans l'expérience de simulation thermique ; $TOC_{ot}$ désigne la valeur TOC d'origine du schiste à mesurer ; $HI_{ot}$ désigne la valeur HI d'origine du schiste à mesurer ; et $a_{51}$, $a_{52}$, $a_{53}$ et $b_{51}$ désignent des coefficients empiriques.

6. Procédé de prédiction de rendements pétrolier et gazier dans l'exploitation de schiste bitumineux in situ selon la revendication 1, comprenant en outre :

l'obtention d'une quantité de retenue de pétrole du schiste à mesurer sur la base de la valeur TOC d'origine, de la valeur Ro, de la valeur HI d'origine du schiste à mesurer et d'un modèle préétabli de prédiction de quantité de retenue de pétrole dans l'exploitation de schiste bitumineux in situ, dans lequel le modèle de prédiction de quantité de retenue de pétrole dans l'exploitation de schiste bitumineux in situ est préétabli sur la base de données de quantité de retenue de pétrole obtenues par réalisation d'une expérience de simulation thermique sur une pluralité d'échantillons de schiste différents et de la valeur TOC d'origine, de la valeur Ro et de la valeur HI d'origine des échantillons de schiste ; et
l'obtention d'une quantité de retenue de gaz du schiste à mesurer sur la base de la valeur TOC d'origine, de la valeur Ro, de la valeur HI d'origine du schiste à mesurer et d'un modèle préétabli de prédiction de quantité de retenue de gaz dans l'exploitation de schiste bitumineux in situ, dans lequel le modèle de prédiction de quantité de retenue de gaz dans l'exploitation de schiste bitumineux in situ est préétabli sur la base de données de quantité de retenue de gaz obtenues par réalisation d'une expérience de simulation thermique sur une pluralité d'échantillons de schiste différents et de la valeur TOC d'origine, de la valeur Ro et de la valeur HI d'origine des échantillons de schiste.

7. Procédé de prédiction de rendements pétrolier et gazier dans l'exploitation de schiste bitumineux in situ selon la revendication 6, dans lequel le modèle de prédiction de quantité de retenue de pétrole dans l'exploitation de schiste bitumineux in situ est :

$$Q_{os} = Q_{og} \times B_{or} \times \frac{HI_{ot}}{HI_{os}} \begin{cases} f(a_6) \times \ln(TOC_o) + f(b_6) & TOC \leq \\ f(c_6) \times TOC_o + f(d_6) & TOC > \end{cases}$$

où $Q_{os}$ désigne la quantité de retenue de pétrole du schiste à mesurer ; $Q_{og}$ désigne une quantité résiduelle de génération de pétrole des échantillons de schiste dans l'expérience de simulation thermique ; $TOC_o$ désigne la valeur de carbone organique total d'origine du schiste à mesurer ; $f(a_6)$, $f(b_6)$, $f(c_6)$, $f(d6)$ désignent des coefficients de correction relatifs à la valeur Ro du schiste à mesurer ; $B_{or}$ désigne un rapport entre un facteur volumique de pétrole sous une pression de formation effective dans une zone de recherche à laquelle appartient le schiste à mesurer, et un facteur volumique de pétrole sous une pression utilisée dans la simulation ; $HI_{os}$ désigne la valeur HI d'origine des échantillons de schiste dans l'expérience de simulation thermique ; et $HI_{ot}$ désigne la valeur HI d'origine du schiste à mesurer.

8. Procédé de prédiction de rendements pétrolier et gazier dans l'exploitation de schiste bitumineux in situ selon la revendication 6, dans lequel le modèle de prédiction de quantité de retenue de gaz dans l'exploitation de schiste bitumineux in situ est :

$$Q_{gs} = Q_{gg} \times B_{gir} \times \frac{HI_{ot}}{HI_{os}} \times f(a_7) \times Ro^{f(b_7)} \,;$$

où, $Q_{gs}$ désigne la quantité de retenue de gaz du schiste à mesurer ; $Q_{gg}$ désigne la quantité résiduelle de génération de gaz des échantillons de schiste dans l'expérience de simulation thermique ; $f(a_7)$ et $f(b_7)$ désignent des coefficients de correction relatifs à $TOC_o$ du schiste à mesurer ; $B_{gir}$ désigne un rapport entre un facteur d'écart de gaz sous une température de formation effective et une pression effective dans une zone de recherche à laquelle appartient le schiste à mesurer, et un facteur d'écart de gaz sous une température et une pression utilisées dans la simulation, $HI_{os}$ désigne la valeur HI d'origine des échantillons de schiste dans l'expérience de simulation thermique ; $HI_{ot}$ désigne la valeur HI d'origine du schiste à mesurer ; et $Ro$ désigne la valeur de Ro obtenue par mesure du schiste à mesurer.

9. Procédé de prédiction de rendements pétrolier et gazier dans l'exploitation de schiste bitumineux in situ selon la revendication 1, dans lequel le modèle de prédiction de rendement pétrolier dans l'exploitation de schiste bitumineux in situ est :

$$Q_{po} = (Q_{os} + Q_{og}) \times f(a_{81})Ro^2 + f(a_{82})Ro + f(a_{83})$$

$$f(a_8) = c_{81}HT^3 + c_{82}HT^2 + c_{83}HT + c_{84}$$

$$HT = 10^{-3} \times HI_o \times TOC_o \,;$$

où, $Q_{po}$ désigne le rendement pétrolier du schiste à mesurer ; $Q_{os}$ désigne la quantité de retenue de pétrole du schiste à mesurer ; $Q_{og}$ désigne la quantité résiduelle de génération de pétrole du schiste à mesurer ; Ro désigne la valeur Ro obtenue par mesure du schiste à mesurer ; $f(a_{81})$, $f(a_{82})$, $f(a_{83})$ désignent des coefficients de correction relatifs à la valeur Ro du schiste à mesurer, $HI_o$ désigne la valeur HI d'origine du schiste à mesurer ; $TOC_o$ désigne la valeur TOC d'origine du schiste à mesurer ; et $c_{81}$, $c_{82}$, $c_{83}$ et $c_{84}$ désignent des coefficients empiriques.

**10.** Procédé de prédiction de rendements pétrolier et gazier dans l'exploitation de schiste bitumineux in situ selon la revendication 1, dans lequel le modèle de prédiction du rendement gazier dans l'exploitation de schiste bitumineux in situ est :

$$Q_{pg} = (Q_{gs} + Q_{gg}) \times f(a_{91}) \times HT^{f(b_{91})};$$

où,

$$f(a_{91}) = \begin{cases} c_{911}HT^2 + c_{912}HT + c_{913} & Ro < 1.25\% \\ c_{914}e^{c_{915}HT} & Ro \geq 1.25\% \end{cases}$$

$$f(b_{91}) = c_{916}HT^2 + c_{917}HT + c_{918};$$

$$HT = 10^{-3} \times HI_o \times TO_o$$

$Q_{pg}$ désigne le rendement gazier du schiste à mesurer ; $Q_{gs}$ désigne la quantité de retenue de gaz du schiste à mesurer ; $Q_{gg}$ désigne la quantité résiduelle de génération de gaz du schiste à mesurer ; $Ro$ désigne la valeur Ro obtenue par mesure du schiste à mesurer ; $HI_o$ désigne la valeur HI d'origine du schiste à mesurer ; $TOC_o$ désigne la valeur TOC d'origine du schiste à mesurer ; $f(a_{91})$ et $f(b_{91})$ désignent des coefficients de correction relatifs à la valeur Ro du schiste à mesurer ; et $c_{911}$, $c_{912}$, $c_{913}$, $c_{914}$, $c_{915}$, $c_{916}$, $c_{917}$ et $c_{918}$ désignent des coefficients empiriques.

**11.** Appareil de prédiction de rendements pétrolier et gazier dans l'exploitation de schiste bitumineux in situ, comprenant :

une unité d'acquisition (02) configurée pour acquérir une valeur de carbone organique total (TOC) d'origine, une valeur de réflectance de vitrinite (Ro) et une valeur d'index d'hydrogène (HI) d'origine d'un schiste à mesurer ; une unité de prédiction de rendement pétrolier (04) configurée pour obtenir un rendement pétrolier du schiste à explorer sur la base de la valeur TOC d'origine, de la valeur Ro, de la valeur HI d'origine du schiste à mesurer et d'un modèle préétabli de prédiction de rendement pétrolier dans l'exploitation de schiste bitumineux in situ, dans lequel le modèle de prédiction de rendement pétrolier dans l'exploitation de schiste bitumineux in situ est préétabli sur la base de données de rendement pétrolier obtenues par réalisation d'une expérience de simulation thermique sur une pluralité d'échantillons de schiste différents et de la valeur TOC d'origine, de la valeur Ro et de la valeur HI d'origine des échantillons de schiste ; et une unité de prédiction de rendement gazier (06) configurée pour obtenir un rendement gazier du schiste à mesurer sur la base de la valeur TOC d'origine, de la valeur Ro, de la valeur HI d'origine du schiste à mesurer et d'un modèle préétabli de prédiction de rendement gazier dans l'exploitation de schiste bitumineux in situ, dans lequel le modèle de prédiction de rendement gazier dans l'exploitation de schiste bitumineux in situ est préétabli sur la base de données de rendement gazier obtenues par réalisation d'une expérience de simulation thermique sur une pluralité d'échantillons de schiste différents et de la valeur de TOC d'origine, de la valeur Ro et de la valeur HI d'origine des échantillons de schiste, et un processeur configuré pour mettre en oeuvre le procédé selon l'une quelconque des revendications 1 à 10.

**12.** Dispositif informatique comprenant une mémoire, un processeur et un programme d'ordinateur stocké dans la mémoire et exécutable par le processeur, dans lequel le processeur met en oeuvre, lors de l'exécution du programme d'ordinateur, le procédé selon l'une quelconque des revendications 1 à 10.

**13.** Support de stockage lisible par ordinateur dans lequel est stocké un programme d'ordinateur destiné à réaliser le procédé selon l'une quelconque des revendications 1 à 10.

acquiring an original total organic carbon (TOC) value, a vitrinite reflectance (Ro) value and an original hydrogen index (HI) value of a shale to be measure ⟋⟍ 101

obtaining an oil yield of the shale to be measured based on the original TOC value, the Ro value, the original HI value of the shale to be measured and a pre-established model for predicting oil yield in in-situ oil shale exploitation ⟋⟍ 102

obtaining a gas yield of the shale to be measured based on the original TOC value, the Ro value, the original HI value of the shale to be measured and a pre-established model for predicting gas yield in in-situ oil shale exploitation ⟋⟍ 103

**FIG. 1**

FIG. 2

FIG. 3

FIG. 4

FIG. 5

FIG. 6

FIG. 7

FIG. 8

FIG. 9

**FIG. 10**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108547612 A

- CN 104700316 A